# EUROPEAN PATENT APPLICATION

(11) **EP 4 803 938 A1**
(43) Date of publication of application: **09.09.2026**
(21) Application number: 24884199.1
(22) Date of filing: 29.08.2024
(51) Int. Cl.: G02B 5/02, G02B 5/30

(54) **OPTICAL FILM, POLAROID, AND DISPLAY APPARATUS**

(30) Priority: 02.11.2023 CN 202311459427; 16.08.2024 CN 202411135977
(71) Applicant: Shenzhen China Star Optoelectronics Semiconductor Display Technology Co., Ltd., Shenzhen, Guangdong 518132 (CN)
(72) Inventor: LI, Hanming, Shenzhen, Guangdong 518132 (CN); LI, Ji, Shenzhen, Guangdong 518132 (CN); TAN, Fang, Shenzhen, Guangdong 518132 (CN); CHEN, Kai, Shenzhen, Guangdong 518132 (CN); YU, Lesheng, Shenzhen, Guangdong 518132 (CN); WANG, Yue, Shenzhen, Guangdong 518132 (CN); TAO, Jin, Shenzhen, Guangdong 518132 (CN)
(74) Representative: Herrero & Asociados, S.L.
(86) International application number: PCT/CN2024/115326
(87) International publication number: WO 2025/092192

(57) **Abstract**

Disclosed are an optical film, a polarizer, and a display device. Regulating particles include first regulating particles and/or second regulating particles. Each first regulating particle has an length to diameter ratio of greater than or equal to 5 and less than or equal to 50, and each second regulating particle has an length to diameter ratio of greater than or equal to 1 and less than 5. The first regulating particles and/or the second regulating particles are dispersed in a dispersion portion of a substrate, and a ratio of a thickness of the dispersion portion to a thickness of the substrate is greater than or equal to 1: 100 and less than 1: 1.

## Description

### TECHNICAL FIELD

The present disclosure relates to the field of display, and more particularly, to an optical film, a polarizer, and a display device.

### BACKGROUND

At present, a polarizer generally has a polarizing layer and an optical film used as a protection layer of the polarizing layer to protect the polarizing layer. Generally, particles are dispersed throughout the optical film for improving the optical effect thereof. However, in order to realize the protective effect of the optical film on the polarizing layer, the thickness of the optical film is relatively large, which is difficult to match the distribution thickness of the particles to achieve a better optical improvement effect, so that it is required to improve the display quality of the display device.

Accordingly, there is a need for an optical film, a polarizer, and a display device to solve the above technical problems.

### SUMMARY

The present disclosure provides an optical film, a polarizer, and a display device, which can alleviate the technical problem that the display quality of the display device is still to be improved due to the fact that the distribution thickness of the particles does not match the thickness of the optical film when achieving a better optical improvement effect.

The present disclosure provides an optical film including:
a substrate including a dispersion portion, wherein a ratio of a thickness of the dispersion portion to a thickness of the substrate is greater than or equal to 1: 100 and less than 1: 1; and
regulating particles dispersed in the dispersion portion, wherein the regulating particle includes:
   first regulating particles, wherein each of the first regulating particles has a plurality of first cross sections, each of the first cross sections has a first circumscribed circle, a ratio of a length of a long axis of each of the first regulating particles to a diameter of the first circumscribed circle with a largest diameter among the first cross sections thereof is greater than or equal to 5 and less than or equal to 50; and/or
   second regulating particles, wherein each of the second regulating particles has a plurality of second cross sections, each of the second cross sections has a second circumscribed circle, a ratio of a length of a long axis of each of the second regulating particles to a diameter of the second circumscribed circle with a largest diameter among the second cross sections thereof is greater than or equal to 1 and less than 5.

The present disclosure also provides a polarizing layer and an optical film, wherein the polarizing layer is disposed on a side of the optical film, a second surface of the optical film is disposed on a side of a first surface of the optical film away from the polarizing layer;
wherein the optical film includes:
a substrate including a dispersion portion, wherein a ratio of a thickness of the dispersion portion to a thickness of the substrate is greater than or equal to 1: 100 and less than 1: 1; and
regulating particles dispersed in the dispersion portion, wherein the regulating particle includes:
   first regulating particles, wherein each of the first regulating particles has a plurality of first cross sections, each of the first cross sections has a first circumscribed circle, a ratio of a length of a long axis of each of the first regulating particles to a diameter of the first circumscribed circle with a largest diameter among the first cross sections thereof is greater than or equal to 5 and less than or equal to 50; and/or
   second regulating particles, wherein each of the second regulating particles has a plurality of second cross sections, each of the second cross sections has a second circumscribed circle, a ratio of a length of a long axis of each of the second regulating particles to a diameter of the second circumscribed circle with a largest diameter among the second cross sections thereof is greater than or equal to 1 and less than 5.

The present disclosure also provides a display device including a polarizer wherein the polarizer includes a polarizing layer and an optical film, the polarizing layer is disposed on a side of the optical film, and a second surface of the optical film is disposed on a side of a first surface of the optical film away from the polarizing layer;
wherein the optical film includes:
a substrate including a dispersion portion, wherein a ratio of a thickness of the dispersion portion to a thickness of the substrate is greater than or equal to 1: 100 and less than 1: 1; and
regulating particles dispersed in the dispersion portion, wherein the regulating particle includes:
   first regulating particles, wherein each of the first regulating particles has a plurality of first cross sections, each of the first cross sections has a first circumscribed circle, a ratio of a length of a long axis of each of the first regulating particles to a diameter of the first circumscribed circle with a largest diameter among the first cross sections thereof is greater than or equal to 5 and less than or equal to 50; and/or
   second regulating particles, wherein each of the second regulating particles has a plurality of second cross sections, each of the second cross sections has a second circumscribed circle, a ratio of a length of a long axis of each of the second regulating particles to a diameter of the second circumscribed circle with a largest diameter among the second cross sections thereof is greater than or equal to 1 and less than 5.

### BRIEF DESCRIPTION OF THE DRAWINGS

In order to clearly explain the technical solutions in the embodiments of the present disclosure, the accompanying drawings will be briefly introduced below for the description of the embodiments. It will be apparent that the accompanying drawings in the following description are merely some of the embodiments of the present disclosure, and other drawings may be made to those skilled in the art based on these accompanying drawings without involving any inventive effort.
FIG. 1 is a schematic diagram of a first structure of an optical film according to some embodiments of the present disclosure.
FIG. 2 is a schematic diagram of a second structure of an optical film according to some embodiments of the present disclosure.
FIG. 3 is a schematic diagram of a third structure of an optical film according to some embodiments of the present disclosure.
FIG. 4 is a schematic diagram of a fourth structure of an optical film according to some embodiments of the present disclosure.
FIG. 5 is a schematic diagram of a fifth structure of an optical film according to some embodiments of the present disclosure.
FIG. 6 is a schematic diagram of a sixth structure of an optical film according to some embodiments of the present disclosure.
FIG. 7 is a schematic diagram of a first structure of a polarizer according to some embodiments of the present disclosure.
FIG. 8 is a schematic diagram of a second structure of a polarizer according to some embodiments of the present disclosure.
FIG. 9 is a schematic diagram of a third structure of a polarizer according to some embodiments of the present disclosure.
FIG. 10 is a schematic diagram of a fourth structure of a polarizer according to some embodiments of the present disclosure.
FIG. 11 is a schematic diagram of a display device according to some embodiments of the present disclosure.

### DETAILED DESCRIPTION

The technical solutions in the embodiments of the present disclosure will be clearly and fully described below in connection with the accompanying drawings in the embodiments of the present disclosure. It will be apparent that the described embodiments are only a part, rather than all of the embodiments of the present disclosure. All other embodiments obtained by a person skilled in the art based on the embodiments in the present disclosure, without involving any inventive effort, fall within the scope of the present disclosure. Furthermore, it is to be understood that the specific embodiments described herein are for purposes of illustration and explanation only and are not intended to limit the present disclosure. In the present disclosure, in the absence of any indication to the contrary, directional terms, such as "up" and "down", which are generally used to refer to those in actual use or working condition of the device, specifically in the direction in the accompanying drawings, and "inside" and "outside", which refers to the position with regard to the contours of the device.

At present, the optical film in the related art, which is generally used as a protection layer of the polarizing layer, has a larger thickness, and it is not matched with the distribution thickness of particles throughout the optical film to achieve better optical improvement, resulting in a technical problem where the display quality of the display device still needs to be improved.

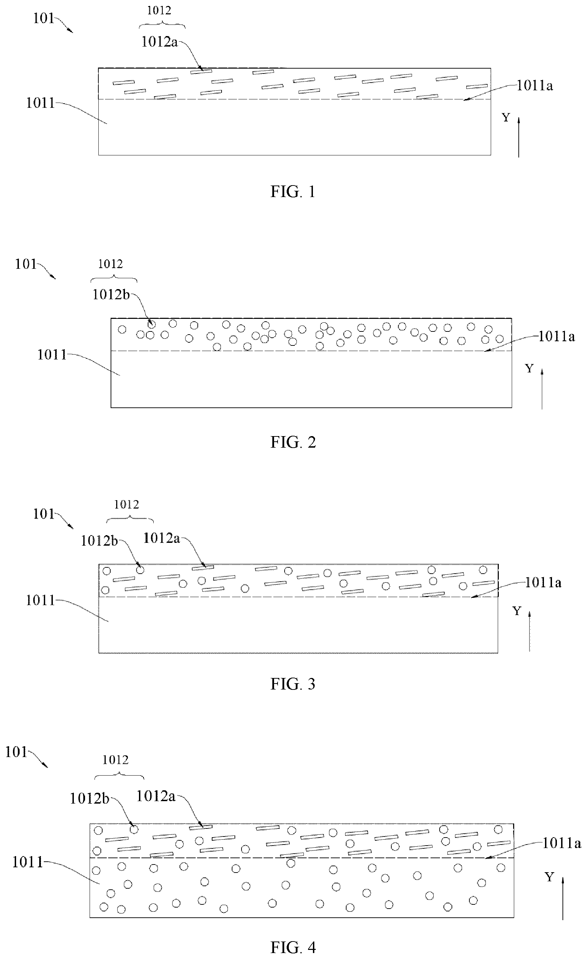

Referring to FIGs. 1 to 4, some embodiments of the present disclosure provides an optical film 101, including a substrate 1011 and regulating particles 1012.

The substrate 1011 includes a dispersion portion 1011a. A ratio of a thickness of the dispersion portion 1011a to a thickness of the substrate 1011 is greater than or equal to 1: 100 and less than 1: 1.

The regulating particles 1012 are dispersed in the dispersion portion 1011a. The regulating particles 1012 include first regulating particles 1012a and/or second regulating particles 1012b.

Each first regulating particle 1012a has a plurality of first cross sections, each of the first cross sections has a first circumscribed circle, a ratio of a length of the first regulating particle 1012a along its long axis to a diameter of the first circumscribed circle with a largest diameter among the first cross sections is greater than or equal to 5 and less than or equal to 50.

Each second regulating particle 1012b has a plurality of second cross sections, each of the second cross sections has a second circumscribed circle, the ratio of the length of the long axis of the second regulating particle 1012b to a diameter of the second circumscribed circle with a largest diameter among the second cross sections is greater than or equal to 1 and less than 5.

According to the embodiments of the present disclosure, the regulating particles 1012 are introduced into the substrate 1011 of the optical film 101, for example, at least one of the first regulating particles 1012a and the second regulating particles 1012 is dispersed in the dispersion portion 1011a, so that the regulating particles 1012 can better improve the optical performances and incrase the display quality of the display device including the optical film 101.

Preferably, the ratio of the thickness of the dispersion portion to the thickness of the substrate is greater than or equal to 1: 10 and less than or equal to 9:10.

Preferably, along the thickness direction of the substrate, the substrate includes a first surface and a second surface opposite to each other, a side of the dispersion portion close to the first surface is disposed parallel to the first surface, and a side of the dispersion portion close to the second surface is disposed parallel to or coincident with the second surface;
The ratio of the thickness of the dispersion portion to the thickness of the substrate is greater than or equal to 1: 4 and less than or equal to 1: 2.

Preferably, along the thickness direction of the substrate, the first regulating particles are dispersed in the dispersion portion, and an acute angle is formed between a long axis of each of the first regulating particles and a plane in which the first surface of the substrate is located. The acute angle is greater than or equal to 0° and less than or equal to 40°.

Preferably, the regulating particles include the second regulating particles that are also dispersed outside the dispersion portion.

Preferably, the first regulating particles are selected from at least one of first sub-regulating particles, second sub-regulating particles, third sub-regulating particles, fourth sub-regulating particles, or fifth sub-regulating particles, which differ in shape from each other. The second regulating particles are selected from at least one of sixth sub-regulating particles, seventh sub-regulating particles, eighth sub-regulating particles, ninth sub-regulating particles, and tenth sub-regulating particles, which differ in shape from each other.

Along an extension direction of a long axis of each first sub-regulating particle, the difference between the diameters of the first circumscribed circles of the first cross sections of each first sub-regulating particle is less than or equal to 0.3 microns.

Along an extension direction of a long axis of each second sub-regulating particle, the difference between the diameters of the first circumscribed circles of the first cross sections at a middle of the second sub-regulating particle is less than or equal to 1 micron. Along a direction away from the middle of the second sub-regulating particle, the diameters of the first circumscribed circles of the first cross sections at a first end of the second sub-regulating particle are gradually reduced, and the difference between the diameters of the first circumscribed circles of the first cross sections at a second end of the second sub-regulating particle is less than or equal to 1 micron.

Along an extension direction of a long axis of each third sub-regulating particle, the difference between the diameters of the first circumscribed circles of the first cross sections at a middle of the third sub-regulating particle is less than or equal to 1 micron. Along a direction away from the middle of the third sub-regulating particle, the diameters of the first circumscribed circles of the first cross sections at a first end of the third sub-regulating particle are gradually reduced, and the difference between the diameters of the first circumscribed circles of the first cross sections at a second end of the third sub-regulating particle are gradually reduced.

Each fourth sub-regulating particle has a first end and a second end that are connected to each other. Along a direction from the first end of the fourth sub-regulating particle toward the second end thereof, the diameters of the first circumscribed circles of the first cross sections of the fourth sub-regulating particle are gradually reduced.

Each fifth sub-regulating particle has a first end and a second end that are connected to each other. Along a direction away from the second end of the fifth sub-regulating particle, the diameters of the first circumscribed circles of the first cross sections at the first end of the fifth sub-regulating particle are gradually reduced. Along a direction away from the first end of the fifth sub-regulating particle, the diameters of the first circumscribed circles of the first cross sections at the second end of the fifth sub-regulating particle are gradually reduced.

Along an extension direction of a long axis of each sixth sub-regulating particle, the difference between the diameters of the second circumscribed circles of the second cross sections of the sixth sub-regulating particle is less than or equal to 0.3 microns.

Each seventh sub-regulating particle has a first end and a second end that are connected to each other. Along a direction away from the second end of the seventh sub-regulating particle, the diameters of the second circumscribed circles of the second cross sections at the first end of the seventh sub-regulating particle are gradually reduced. Along a direction away from the first end of the seventh sub-regulating particle, the diameters of the second circumscribed circles of the second cross sections at the second end of the seventh sub-regulating particle are gradually reduced.

Along an extension direction of a long axis of each eighth sub-regulating particle, the difference between the diameters of the second circumscribed circles of the second cross sections at a middle of the eighth sub-regulating particle is less than or equal to 1 micron. Along a direction away from the middle of the eighth sub-regulating particle, the diameters of the second circumscribed circles of the second cross sections at a first end of the eighth sub-regulating particle are gradually reduced, and the difference between the diameters of the second circumscribed circles of the second cross sections at a second end of the eighth sub-regulating particle is less than or equal to 1 micron.

Along an extension direction of a long axis of each ninth sub-regulating particle, the difference between the diameters of the second circumscribed circles of the second cross sections at a middle of the ninth sub-regulating particle is less than or equal to 1 micron. Along a direction away from the middle of the ninth sub-regulating particle, the diameters of the second circumscribed circles of the second cross sections at a first end of the ninth sub-regulating particle are gradually reduced, and the diameters of the second circumscribed circles of the second cross sections at a second end of the ninth sub-regulating particle are gradually reduced.

Each tenth sub-regulating particle has a first end and a second end that are connected to each other. Along a direction from the first end of the tenth sub-regulating particle toward the second end of the tenth sub-regulating particle, the diameters of the second circumscribed circles of the second cross sections of the tenth sub-regulating particle are gradually reduced.

Preferably, the regulating particles include the first regulating particles and the second regulating particles, the mass fraction of the first regulating particles in the regulating particles is less than 50%, and the mass fraction of the second regulating particles in the regulating particles is greater than 50%.

Preferably, the mass fraction of the regulating particles in the substrate is greater than or equal to 0.0001% and less than or equal to 5%. The tensile strength of the optical film is greater than or equal to 30 MPa and less than or equal to 150 MPa.

Preferably, the substrate includes a first sub-layer, a second sub-layer and a third sub-layer that are stacked. The first sub-layer and the third sub-layer are disposed on opposite sides of the second sub-layer. The dispersion portion is located in at least one of the first sub-layer, the second sub-layer or the third sub-layer.

Preferably, the dispersion portion is located in the first sub-layer and/or in the third sub-layer.

Preferably, the dispersion portion is disposed on a side of the first sub-layer away from the second sub-layer, and/or the dispersion portion is disposed on a side of the third sub-layer away from the second sub-layer.

Preferably, the tensile strength of the first sub-layer is greater than that of the second sub-layer, and the tensile strength of the third sub-layer is greater than that of the second sub-layer.

Preferably, the transmittance of the second sub-layer is greater than that of the first sub-layer and the third sub-layer.

Preferably, the elongation at break of the optical film is greater than or equal to 1% and less than or equal to 300%.

Preferably, the fracture strength of the optical film is greater than or equal to 50 N/mm and less than or equal to 500 N/mm, and the thermal shrinkage of the optical film is less than 2%.

The technical solutions of the present disclosure will now be described in connection with specific examples.

Referring to FIGs. 1 to 4, in the embodiments, the first regulating particles 1012a and/or the second regulating particles 1012b are dispersed in the dispersion portion 1011a of the substrate 1011. When at least one of the first regulating particles 1012a or the second regulating particles 1012b are dispersed in the dispersion portion 1011a, the first regulating particles 1012a are only dispersed in the dispersion portion 1011a of the substrate 1011. That is, the distribution range of the first regulating particles 1012 constitutes the dispersion portion 1011a of the substrate 1011. Alternatively, the second regulating particles 1012b are only dispersed in the dispersion portion 1011a of the substrate 1011. That is, the distribution range of the second regulating particles 1012 constitutes the dispersion portion 1011a of the substrate 1011. Alternatively, the first regulating particles 1012a and the second regulating particles 1012b are only dispersed in the dispersion portion 1011a of the substrate 1011. That is, the distribution range of the first regulating particles 1012 and the second regulating particles 1012 constitutes the dispersion portion 1011a of the substrate 1011.

In some embodiments, the substrate 1011 includes a first surface and a second surface opposite to each other along the thickness direction of the substrate 1011. The dispersion portion 1011a includes a first side surface and a second side surface that are opposite to each other in the thickness direction of the substrate 1011. The first side surface is located on a side of the second side surface close to the first surface. The thickness of the dispersion portion 1011a is a maximum value of the spacing between the first side and the second side of the dispersion portion 1011a. A ratio of the thickness of the dispersion portion 1011a to the thickness of the substrate 1011 is greater than or equal to 1: 100 and less than 1: 1. That is, the ratio of the maximum value of the spacing between the first side and the second side of the dispersion portion 1011a (i.e., the thickness of the dispersion portion 1011a) to the thickness of the substrate 1011 is greater than or equal to 1: 100 and less than 1: 1.

In some embodiments, when the ratio of the thickness of the dispersion portion 1011a to the thickness of the substrate 1011 is greater than or equal to 1: 100 and less than or equal to 1: 1, along the thickness direction of the substrate 1011, the regions of the dispersion portion 1011a and the substrate 1011 in which the ratio of the thickness of the dispersion portion 1011a to the thickness of the substrate 1011 is greater than or equal to 1% coincide with each other, and the regions of the dispersion portion 1011a and the substrate 1011 in which the ratio of the thickness of the dispersion portion 1011a to the thickness of the substrate 1011 is less than 100% coincide with each other.

In some embodiments, the thickness distribution of the dispersion portion 1011a is uniform. That is, the difference between the maximum value and the minimum value of the spacing between the side of the dispersion portion 1011a close to the first surface and the side of the dispersion portion 1011a close to the second side surface is less than or equal to 5% of the average of the two. Further, the side of the dispersion portion close to the first surface is parallel to the first surface, and the side of the dispersion portion close to the second surface is parallel to or coincides with the second surface. That is, the maximum value and the minimum value of the spacing between the side of the dispersion portion 1011a close to the first surface and the side of the dispersion portion 1011a close to the second side surface are equal to each other.

In some embodiments, the dispersion portion 1011a is disposed close to the first surface. Althernatively, the dispersion portion 1011a is disposed close to the second surface. When the dispersion portion 1011a is disposed close to the first surface, the minimum spacing between the first side surface and the first surface is less than the minimum spacing between the second side surface and the second surface in the thickness direction of the substrate 1011. When the dispersion portion 1011a is disposed close to the second surface, the minimum spacing between the first side surface and the first surface is larger than the minimum spacing between the second side surface and the second surface in the thickness direction of the substrate 1011.

In some embodiments, when the dispersion portion 1011a is disposed close to the first surface, the first side surface is coplanar with the first surface. Preferably, the first side surface coincides with the first surface. When the dispersion portion 1011a is disposed close to the second surface, the second side surface is coplanar with the second surface. Preferably, the second side surface coincides with the second surface.

In some embodiments, the plane in which the first surface is located is parallel to the plane in which the second surface is located. The first side surface is parallel to the first surface, and the second side surface is parallel to the second surface.

In some embodiments, when the first side surface is not coplanar with the first surface, the first side surface is tangent to the regulating particles 1012 dispersed only in the dispersion portion 1011a closest to the first side surface. For example, the first regulating particles 1012a are dispersed only in the dispersion portion 1011a, and the first side surface is tangent to one of the first regulating particles 1012a closest to the first side surface. The second regulating particles 1012b are dispersed only in the dispersion portion 1011a, and the first side surface is tangent to one of the second regulating particles 1012b closest to the first side surface. The first regulating particles 1012a and the second regulating particles 1012b are dispersed only in the dispersion portion 1011a, and the first side surface is tangent to one of the first regulating particles 1012a and the second regulating particles 1012b closest to the first side surface.

In some embodiments, when the second side surface is not coplanar with the second surface, the second side surface is tangent to the regulating particles 1012 dispersed only within the dispersion portion 1011a closest to the second side surface. For example, the first regulating particles 1012a are dispersed only in the dispersion portion 1011a, and the second side surface is tangent to one of the first regulating particles 1012a closest to the second side. The second regulating particles 1012b are dispersed only in the dispersion portion 1011a, and the second side surface is tangent to one of the second regulating particles 1012b closest to the second side surface. The first regulating particles 1012a and the second regulating particles 1012b are dispersed only in the dispersion portion 1011a, and the second side surface is tangent to one of the first regulating particles 1012a and the second regulating particles 1012b closest to the second side surface.

In some embodiments, the ratio of the thickness of the dispersion portion 1011a to the thickness of the substrate 1011 is greater than or equal to 1: 100 and less than 1: 1, for example, may be 1.5:100, 1:50, 1:40, 1: 30, 1: 20, 1: 10, 1: 8, 1: 6, 1: 5, 1: 4, 1: 2, 1: 3, 3:5, 2: 3, 3:4, 4:5, 5:6, 7:8, 9:10, 19:20, 29:30, 39:40, 49:50, and the like. Preferably, the ratio of the thickness of the dispersion portion 1011a to the thickness of the substrate 1011 is greater than or equal to 1: 10 and less than or equal to 9:10. In this way, the regulating particles 1012 dispersed only in the dispersion portion 1011a are prone to reach the distribution thickness thereof with better optical improvement effect, thereby improving the optical effect of the optical film 101 (for example, contrast ratio, chromaticity angle of view, or the like), and improving the display quality of the display device including the optical film 101. More preferably, the ratio of the thickness of the dispersion portion 1011a to the thickness of the substrate 1011 is greater than or equal to 1: 4 and less than or equal to 1: 2. In this way, the regulating particles 1012 dispersed only in the dispersion portion 1011a are prone to reach the distribution thickness thereof with better optical improvement effect, thereby improving the optical effect of the optical film 101 (for example, contrast ratio, chromaticity angle of view, or the like), and improving the display quality of the display device including the optical film 101.

In some embodiments, the optical film 101 is formed by a multi-layer co-extrusion process. The optical film 101 is formed by co-extruding and laminating a plurality of optical sub-layers on the same production line. Accordingly, the substrate 1011 is formed by co-extruding and laminating a plurality of substrate sub-layers. In the formation of the optical film 101, the first regulating particles 1012a and/or the second regulating particles 1012b are dispersed in one or more of the substrate sub-layers (for example, if the total number of the substrate sub-layers of the substrate 1011 is M and M is an integer greater than or equal to 2, the first regulating particles 1012a and/or the second regulating particles 1012b may be dispersed within less than M substrate sublayers), so that the distribution thickness of the first regulating particles 1012a and/or the second regulating particles 1012b in the optical film 101 is less than the thickness of the optical film 101. The first regulating particles 1012a and/or the second regulating particles 1012b are dispersed in the substrate sub-layers to form the dispersion portion 1011a, thereby facilitating simplification of the processing process while better improving the optical performance of the optical film 101 by the regulating particles 1012 and improving the display quality of the display device including the optical film 101. For example, the substrate 1011 may be formed by co-extruding and laminating three substrate sub-layers, an upper substrate sub-layer, a intermediate substrate sub-layer, and a lower substrate sub-layer, respectively. The first regulating particles 1012a may be dispersed in the upper substrate sub-layer or the lower substrate sub-layer. The upper substrate sub-layer, the intermediate substrate sub-layer, and the lower substrate sub-layer may be co-extruded and laminated to form the optical film 101. At this time, the upper substrate sub-layer or the lower substrate sub-layer forms the dispersion portion 1011a. When the optical film 101 is applied to the display device, the optical film 101 may be located on a light-emitting side of the display panel of the display device, the upper substrate sub-layer is located on a side of the intermediate substrate sub-layer away from the display panel, and the lower substrate sub-layer is located on a side of the intermediate substrate sub-layer close to the display panel.

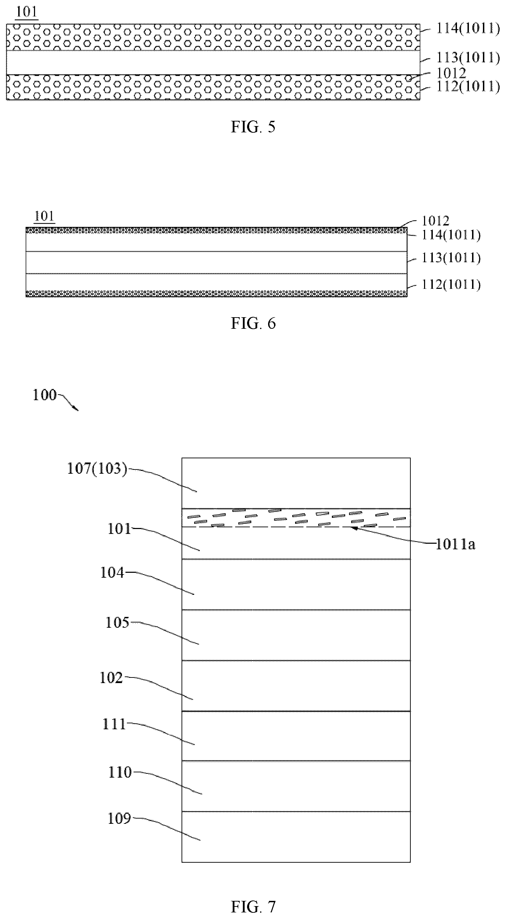

For example, referring to FIG. 5, the substrate 1011 includes a first sub-layer 112, a second sub-layer 113, and a third sub-layer 114 that are stacked. The first sub-layer 112 and the third sub-layer 114 are located on opposite sides of the second sub-layer 113. The dispersion portion 1011a is located in at least one of the first sub-layer 112, the second sub-layer 113, or the third sub-layer 114.

Further preferably, the dispersion portion 1011a is located in the first sub-layer 112 and/or in the third sub-layer 114. In this case, the first sub-layer 112 or the third sub-layer 114 may be considered as a surface layer of the substrate 1011, and the second sub-layer 113 may be considered as a core layer of the substrate 1011. In the embodiments of the present disclosure, the dispersion portion 1011a is disposed in the surface layer of the optical film 10, rather than in the core layer thereof. Since the breakage of film layers first occurs on the surface layer during the stretching of the film layers, the distribution of the regulating particles 1012 on the surface layer in the embodiments of the present disclosure is more advantageous to enhance the tensile strength of the film layers.

In some embodiments, referring to FIG. 6, the dispersion portion 1011a is located on a side of the first sub-layer 112 away from the second sub-layer 113, and/or the dispersion portion 1011a is located on a side of the third sub-layer 114 away from the second sub-layer 113. That is, the diffusion particles 1012 may be distributed at a side of the first sub-layer 112 away from the second sub-layer 113, or at a side of the third sub-layer 114 away from the second sub-layer 113, or at a side of the first sub-layer 112 away from the second sub-layer 113 and a side of the third sub-layer 114 away from the second sub-layer 113. In the embodiments of the present disclosure, the diffusion particles 12 are distributed at an outer surface of the optical film 10, so that the tensile strength of the film layer can be improved.

Referring to FIG. 5 or 6, in the embodiments of the present disclosure, the properties of the first sub-layer 112, the second sub-layer 113, and the third sub-layer 114 are differentially designed so as to improve the tensile strength and the optical improvement effect of the optical film 10.

In some embodiments, the tensile strength of the first sub-layer 112 is greater than that of the second sub-layer 113, and the tensile strength of the third sub-layer 114 is greater than that of the second sub-layer 113. Since the breakage of the film layers first occurs on the surface layer during the stretching of the film layers, the tensile strength of the first sub-layer 112 and the third sub-layer 114 as the surface layers are set to be relatively large according to the present embodiments, thereby facilitating improvement of the tensile strength of the optical film 101.

In some embodiments, the transmittance of the second sub-layer 113 is greater than the transmittance of the first sub-layer 112, and the transmittance of the second sub-layer 113 is greater than the transmittance of the third sub-layer 114. According to the embodiments of the present disclosure, the increase of the transmittance of the second sub-layer 113 may compensate for the loss of transmittance of the first sub-layer 112 and the third sub-layer 114 due to incorporation of the regulating particles 1012.

In some embodiments, the first regulating particles 1012a are dispersed in the dispersion portion 1011a, and an acute angle is formed between the long axis of each first regulating particle 1012a and the plane in which the first surface is located. The acute angle is greater than 0° and less than or equal to 40°, for example, may be 1°, 2°, 5°, 8°, 10°, 12°, 15°, 18°, 20°, 25°, 28°, 30°, 35°, 38°, and the like. When the first regulating particles 1012a are dispersed in the dispersion portion 1011a, the distribution thickness of the first regulating particles 1012a is reduced, and the angle formed between the long axis of each first regulating particle 1012a and the plane in which the first surface is located is more easily adjusted and regularized to be less than or equal to 40 degrees, thereby increasing light amount scattered by the first regulating particles 1012a toward a direction parallel to the first surface, and increasing the chromaticity angle of view and the contrast ratio of the optical film 101 by the first regulating particles 1012a. The acute angle is greater than 0° and less than or equal to 20°, which facilitates further improving the increase of the chromaticity angle of view and the contrast ratio of the optical film 101 by the first regulating particles 1012a.

In some embodiments, the dispersion portion 1011a includes a first dispersion sub-portion in which the first regulating particles 1012a are dispersed. When the first regulating particles 1012a are dispersed only in the dispersion portion 1011a, and the regulating particles further include the second regulating particles 1012b, the dispersion portion 1011a further includes a second dispersion sub-portion, and the second regulating particles 1012b are dispersed only in the second dispersion sub-portion. In the thickness direction of the substrate 1011, the first dispersion sub-portion may overlap or coincide with the second dispersion sub-portion, and the first dispersion sub-portion may also be disposed away from the second dispersion sub-portion.

In some embodiments, a side of the first dispersion sub-portion close to the first surface is parallel to the plane in which the first surface is located, and a side of the first dispersion sub-portion close to the second surface is parallel to or coincides with the plane in which the second surface is located.

In some embodiments, a side of the second dispersion sub-portion close to the first surface is parallel to the plane in which the first surface is located, and a side of the second dispersion sub-portion close to the second surface is parallel to or coincides with the plane in which the second surface is located.

In some embodiments, when the first regulating particles 1012a are dispersed in the dispersion portion 1011a, and the regulating particles further include the second regulating particles 1012b, the second regulating particles 1012b may also be dispersed outside the dispersion portion 1011a, and may be distributed within the substrate 1011. A ratio of the distribution thickness of the second regulating particles 1012b within the substrate 1011 to the thickness of the substrate 1011 is greater than or equal to 1: 100 and less than or equal to 1: 1 in the thickness direction of the substrate 1011.

When the ratio of the distribution thickness of the second regulating particles 1012b within the substrate 1011 to the thickness of the substrate 1011 is 1: 1, the second regulating particles 1012b are dispersed outside the dispersion portion 1011a, and the first dispersion sub-portion coincides with the second dispersion sub-portion.

In some embodiments, each regulating particle 1012 has the long axis and the diameter, in which the length of the long axis of the regulating particle 1012 is the spacing between two ends of the long axis of the regulating particle 1012. Each regulating particle 1012 has a plurality of cross sections along a direction perpendicular to an extension direction of the long axis of the regulating particle 1012, each of the cross sections has a circumscribed circle, and the diameter of the regulating particle 1012 corresponds to the largest diameter of all of the circumscribed circles. Two points that are farthest from each other in one cross section of the regulating particle 1012 are located on the circumscribed circle of the cross section, and the distance between the two farthest points in the cross section is the diameter of the circumscribed circle.

In some embodiments, the regulating particles 1012 include first regulating particles 1012a that enhance both the chromaticity angle of view and the contrast ratio of the optical film 101 while reducing the rainbow pattern of the optical film 101. Each first regulating particle 1012a has a plurality of first cross sections, each of the first cross sections has a first circumscribed circle, the ratio of the length of the long axis of the first regulating particle 1012a to the diameter of the first circumscribed circle with a largest diameter among the first cross sections thereof is greater than or equal to 5 and less than 50, where the first cross sections are perpendicular to the extension direction of the long axis of the first regulating particle 1012a. For example, the ratio of the length of the long axis of the first regulating particle 1012a to a diameter of the first circumscribed circle with a largest diameter among the first cross sections thereof may be 10, 12, 15, 16, 18, 20, 30, 32, 34, 35, 36, 38, 40, 42, 45, 46, 48, or the like. The diameter of the first circumscribed circle of one first cross section of the first regulating particle 1012a is the spacing between two points of the first cross section that are farthest from each other. By using the first regulating particles 1012a having a larger length-to-diameter ratio (ratio of the length of the long axis to the diameter of the first circumscribed circle with the largest diameter), it is easier to change the propagation direction of more light through the regulating particles 1012, thereby facilitating the improvement of the chromaticity angle of view and the contrast ratio by the regulating particles 1012.

In some embodiments, the first regulating particles 1012a are selected from at least one of first sub-regulating particles, second sub-regulating particles, third sub-regulating particles, fourth sub-regulating particles, and fifth sub-regulating particles that differ in shape from each other.

Along the extension direction of the long axis of each first sub-regulating particle, the difference between the diameters of the first circumscribed circles of the first cross sections of the first sub-regulating particle is less than or equal to 0.3 microns, for example, may be 0 microns, 0.28 microns, 0.25 microns, 0.22 microns, 0.2 microns, 0.18 microns, 0.15 microns, 0.12 microns, 0.1 microns, 0.08 microns, 0.05 microns, 0.02 microns, or the like. In some embodiments, along the extension direction of the long axis of each first sub-regulating particle, a diameter of a first circumscribed circle of the first cross section at the first end of the first sub-regulating particle is the same as a diameter of a first circumscribed circle of the first cross section at the middle of the first sub-regulating particle. A diameter of a first circumscribed circle at the second end of the first sub-regulating particle is the same as a diameter of a first circumscribed circle at the middle of the first sub-regulating particle.

In some embodiments, the first cross sections of the first sub-regulating particle may of a regular shape or a random shape, such as a circle, an ellipse, a triangle, a quadrilateral, or the like.

In some embodiments, the first sub-regulating particles may be rod-shaped particles. When the first sub-regulating particles are of a rod shape, the first cross sections of the first sub-regulating particle are of a circular or an elliptical shape. When the first cross sections of the first sub-regulating particle are of a circular shape, the first circumscribed circles of the first cross sections of the first sub-regulating particle may coincide with the first cross sections. When the first cross sectiosn of the first sub-regulating particle are of an elliptical shape, the diameter of the first circumscribed circle of each of the first cross sections of the first sub-regulating particle is a length of a long axis of each of the elliptical first cross sections of the first sub-regulating particle, and a ratio of a long axis to a short axis of one of the elliptical first cross sections of the first sub-regulating particle is greater than 1 and less than or equal to 3, for example, may be 1.2, 1.5, 1.8, 2, 2.2, 2.5, 2.8, or the like.

Along the extension direction of the long axis of each second sub-regulating particle, the difference between the diameters of the first circumscribed circles of the first cross sections at the middle of the second sub-regulating particle is less than or equal to 1 micron, for example, may be 0 microns, 0.95 microns, 0.8 microns, 0.78 microns, 0.75 microns, 0.72 microns, 0.7 microns, 0.68 microns, 0.65 microns, 0.62 microns, 0.6 microns, 0.58 microns, 0.55 microns, 0.52 microns, 0.5 microns, 0.48 microns, 0.45 microns, 0.42 microns, 0.4 microns, 0.38 microns, 0.35 microns, 0.32 microns, 0.3 microns, 0.28 microns, 0.25 microns, 0.22 microns, 0.2 microns, 0.18 microns, 0.15 microns, 0.12 microns, 0.1 microns, 0.08 microns, 0.05 microns, 0.02 microns, or the like. Along a direction away from the middle of the second sub-regulating particle, the diameters of the first circumscribed circles of the first cross sections at the first end of the second sub-regulating particle are gradually reduced, and the difference between the diameters of the first circumscribed circles of the first cross sections at the second end of the second sub-regulating particle is less than or equal to 1 micron, for example, may be 0 microns, 0.95 microns, 0.8 microns, 0.78 microns, 0.75 microns, 0.72 microns, 0.7 microns, 0.68 microns, 0.65 microns, 0.62 microns, 0.6 microns, 0.58 microns, 0.55 microns, 0.52 microns, 0.5 microns, 0.48 microns, 0.45 microns, 0.42 microns, 0.4 microns, 0.38 microns, 0.35 microns, 0.32 microns, 0.3 microns, 0.28 microns, 0.25 microns, 0.22 microns, 0.2 microns, 0.18 microns, 0.15 microns, 0.12 microns, 0.1 microns, 0.08 microns, 0.05 microns, 0.02 micron, or the like. In some embodiments, along the direction away from the middle of the second sub-regulating particle, the diameters of the first circumscribed circles of the first cross sections at the first end of the second sub-regulating particle are gradually reduced, and the diameters of the first circumscribed circles of the first cross sections at the second end of the second sub-regulating particle is the same as the diameters of the first circumscribed circles of the first cross sections at the middle of the second sub-regulating particle.

It will be appreciated that along the direction away from the middle of the second sub-regulating particle, the diameters of the first circumscribed circles of the first cross sections at the first end of the second sub-regulating particle are gradually reduced, indicating a tendency of the diameters of the first circumscribed circles of the first cross sections at the first end of the second sub-regulating particle to decrease in the direction away from the middle of the second sub-regulating particle, including but not limited to, the diameters of the first circumscribed circles of the first cross sections located at the first end of the second sub-regulating particle gradually decreasing in the direction away from the middle of the second sub-regulating particle.

In some embodiments, the first cross sections of the second sub-regulating particle may be of a regular shape or a random shape such as a circle, an ellipse, a triangle, a quadrilateral, or the like.

In some embodiments, the second sub-regulating particles may be of an acicular shape having diameters that decrease towards one end.

In some embodiments, when the second sub-regulating particles are acicular particles having diameters that decrease towards one end, the first cross sections of each second sub-regulating particle may be of a circular or an elliptical shape. When the first cross sections at the second end or the middle of the second sub-regulating particles are of an elliptical shape, the ratio of a long axis to a short axis of any of the elliptical first cross sections at the second end or middle of the second sub-regulating particles is greater than 1 and less than or equal to 3, for example, may be 1.2, 1.5, 1.8, 2, 2.2, 2.5, 2.8, or the like. The shape of the first cross sections at the first end of the second sub-regulating particle coincides with the shape of the first cross sections at the middle of the second sub-regulating particle, and the area are gradually reduced in the direction away from the middle of the second sub-regulating particle.

Along the extension direction of the long axis of each third sub-regulating particle, the difference between the diameters of the first circumscribed circles of the first cross sections at the middle of the third sub-regulating particle is less than or equal to 1 micron, for example, may be 0 microns, 0.95 microns, 0.8 microns, 0.78 microns, 0.75 microns, 0.72 microns, 0.7 microns, 0.68 microns, 0.65 microns, 0.62 microns, 0.6 microns, 0.58 microns, 0.55 microns, 0.52 microns, 0.5 microns, 0.48 microns, 0.45 microns, 0.42 microns, 0.4 microns, 0.38 microns, 0.35 microns, 0.32 microns, 0.3 microns, 0.28 microns, 0.25 microns, 0.22 microns, 0.2 microns, 0.18 microns, 0.15 microns, 0.12 microns, 0.1 microns, 0.08 microns, 0.05 microns, 0.02 microns, or the like. Along the direction away from the middle of the third sub-regulating particle, the diameters of the first circumscribed circles of the first cross sections at the first end of the third sub-regulating particle are gradually reduced, and the diameters of the first circumscribed circles of the first cross sections at the second end of the third sub-regulating particle are gradually reduced. In some embodiments, along the extension direction of the long axis of the third sub-regulating particle, the diameters of the first circumscribed circles of the first cross sections at the middle of the third sub-regulating particle are uniform, and the diameters of the first circumscribed circles of the first cross sections at the first end and the second end of the third sub-regulating particle gradually change.

It will be appreciated that along the direction away from the middle of the third sub-regulating particle, the diameters of the first circumscribed circles of the first cross sections at the first end of the third sub-regulating particle are gradually reduced, indicating a tendency of the diameters of the first circumscribed circles of the first cross sections at the first end of the third sub-regulating particle to decrease in the direction away from the middle of the third sub-regulating particle, including but not limited to, the diameters of the first circumscribed circles of the first cross sections at the first end of the third sub-regulating particle gradually decreasing in the direction away from the middle of the third sub-regulating particle.

It will be appreciated that along the direction away from the middle of the third sub-regulating particle, the diameters of the first circumscribed circles of the first cross sections at the second end of the third sub-regulating particle are gradually reduced, indicating a tendency of the diameters of the first circumscribed circles of the first cross sections at the second end of the third sub-regulating particle to decrease in the direction away from the middle of the third sub-regulating particle, including but not limited to, the diameters of the first circumscribed circles of the first cross sections at the second end of the third sub-regulating particle gradually decreasing in the direction away from the middle of the third sub-regulating particle.

In some embodiments, the first cross sections of the third sub-regulating particle may be of a regular shape or a random shape such as a circle, an ellipse, a triangle, a quadrilateral shape, or the like.

In some embodiments, the third sub-regulating particles may be of an acicular shape having diameters that decrease towards two ends.

In some embodiments, when the third sub-regulating particles may be acicular particles having diameters that decrease towards two ends, the first cross sections of each third sub-regulating particle may be of a circular or an elliptical shape. When the first cross sections at the middle of the third sub-regulating particle are of an elliptical shape, the ratio of a long axis to a short axis of any of the elliptical first cross sections at the middle of the third sub-regulating particle is greater than 1 and less than or equal to 3, for example, may be 1.2, 1.5, 1.8, 2, 2.2, 2.5, 2.8, or the like. The shape of the first cross sections at the first end and the second end of the third sub-regulating particle is the same as the shape of the first cross sections at the middle of the third sub-regulating particle, and the area are gradually reduced in the direction away from the middle of the third sub-regulating particle.

Each fourth sub-regulating particle has the first end and the second end that are connected to each other. Along the direction from the first end of the fourth sub-regulating particle toward the second end thereof, the diameters of the first circumscribed circles of the first cross sections of the fourth sub-regulating particle are gradually reduced.

It will be appreciated that along the direction from the seocnd end of the fourth sub-regulating particle toward the second end thereof, the diameters of the first circumscribed circles of the ninth cross sections of the fourth sub-regulating particle are gradually reduced, indicating a tendency for the diameters of the first circumscribed circles of the first cross sections of the fourth sub-regulating particle to decrease in the direction from the first end of the fourth sub-regulating particle toward the second end thereof, including but not limited to, the diameters of the first circumscribed circles of the first cross sections of the fourth sub-regulating particle gradually decreasing in the direction from the first end of the fourth sub-regulating particle toward the second end of the fourth sub-regulating particle.

In some embodiments, the first cross sections of the fourth sub-regulating particles may be a regular shape or a random shape such as a circle, an ellipse, a triangle, a quadrilateral, or the like.

In some embodiments, the fourth sub-regulating particles may be long cone-shaped particles.

In some embodiments, when the fourth sub-regulating particles are long cone-shaped particles, the first cross sections of the fourth sub-regulating particles are circular or elliptical. Along a direction from the first end toward the second end of each fourth sub-regulating particle, the first cross sections of the fourth sub-regulating particle are consistent in shape and are gradually reduced in area. When the first cross sections of the fourth sub-regulating particles are elliptical, the ratio of the long axis of the shape of any of the elliptical first cross sections of the fourth sub-regulating particle to the short axis of the elliptical shape is greater than 1 and less than or equal to 3, for example, may be 1.2, 1.5, 1.8, 2, 2.2, 2.5, 2.8, or the like.

Each fifth sub-regulating particle has a first end and a second end that are connected to each other. The diameters of the first circumscribed circles of the first cross sections at the first end of the fifth sub-regulating particle are gradually reduced in a direction away from the second end of the fifth sub-regulating particle, and the diameters of the first circumscribed circles of the first cross sections at the second end of the fifth sub-regulating particle are gradually reduced in a direction away from the first end of the fifth sub-regulating particle.

It will be appreciated that the diameters of the first circumscribed circles of the first cross sections at the first end of each fifth sub-regulating particle are gradually reduced in a direction away from the second end of the fifth sub-regulating particle, indicating a tendency for the diameters of the first circumscribed circles of the first cross sections at the first end of the fifth sub-regulating particle to decrease in a direction away from the second end of the fifth sub-regulating particle, including, but not limited to, the diameters of the first circumscribed circles of the first cross sections at the first end of the fifth sub-regulating particle being recuded gradually in the direction away from the second end of the fifth sub-regulating particle.

It will be appreciated that the diameters of the first circumscribed circles of the first cross sections at the second end of each fifth sub-regulating particle are gradually reduced in a direction away from the first end of the fifth sub-regulating particle, indicating a tendency for the diameters of the first circumscribed circles of the first cross sections at the second end of the fifth sub-regulating particle to decrease in a direction away from the first end of the fifth sub-regulating particle, including, but not limited to, the diameters of the first circumscribed circles of the first cross sections at the second end of the fifth sub-regulating particle being gradually reduced in the direction away from the first end of the fifth sub-regulating particle.

In some embodiments, the first cross sections of the fifth sub-regulating particles may be a regular shape or a random shape such as a circle, an ellipse, a triangle, a quadrilateral, or the like.

In some embodiments, the fifth sub-regulating particles may be bipyramidal particles and/or ellipsoidal particles.

In some embodiments, when the fifth sub-regulating particles are bipyramidal particles and/or ellipsoidal particles, the first cross sections of the fifth sub-regulating particles are circular or ellipsoidal. In a direction away from the second end of the fifth sub-regulating particle, the first cross sections located at the first end of the fifth sub-regulating particle conforms in shape and are gradually reduced in area. In a direction away from the first end of the fifth sub-regulating particle, the first cross sections located at the second end of the fifth sub-regulating particle conforms in shape and are gradually reduced in area. When the first cross sections of the fifth sub-regulating particles are elliptical, the ratio of the long axis of the elliptical shape of any of the first cross sections of the fifth sub-regulating particle to the short axis of the elliptical shape is greater than 1 and less than or equal to 3, for example, may be 1.2, 1.5, 1.8, 2, 2.2, 2.5, 2.8, or the like.

The fifth sub-regulating particles are different from the ellipsoidal particles in that when the fifth sub-regulating particles are bipyramidal particles, the cross sections of the fifth sub-regulating particle in a direction parallel to the long axis of the fifth sub-regulating particle is a polygon such as a triangle or a quadrilateral. When the fifth sub-regulating particles are ellipsoidal particles, the cross sections of the fifth sub-regulating particles in a direction parallel to the long axis of the fifth sub-regulating particles are elliptical.

In some embodiments, the length of the long axis of the first regulating particles 1012a is greater than or equal to 1 micron and less than or equal to 200 microns, for example, may be 5 microns, 10 microns, 50 microns, 60 microns, 70 microns, 80 microns, 90 microns, 100 microns, 120 microns, 150 microns, 180 microns, or the like, so as to effectively enhance the chromaticity angle of view of the optical film 101 while reducing rainbow patterns of the optical film 101. Preferably, the length of the long axis of the first regulating particles 1012a is greater than or equal to 40 micron and less than or equal to 100 micron, so that the size of the first regulating particles 1012a is more concentrated, thereby facilitating further comprehensive improvement of the optical performance of the optical film 101.

In some embodiments, the regulating particles 1012 include second regulating particles 1012b.

In some embodiments, the second regulating particles 1012b have a plurality of second cross sections, each of the second cross sections has a second circumscribed circle , the ratio of the length of the long axis of the second regulating particles 1012b to the diameter of the second circumscribed circle with a largest diameter among the plurality of second circumscribed circle s is greater than or equal to 1 and less than 5, for example, may be 1.1, 1.2, 1.3, 1.4, 1.5, 1.6, 1.7, 1.8, 1.9, 2, 2.2, 2.5, 2.8, 3, 3.5, 4, 4.5, or the like. The second cross sections are perpendicular to the extension direction of the long axis of the first regulating particles 1012a. By making the regulating particles 1012 include the second regulating particles 1012b having a smaller length-to-diameter ratio (a ratio of the length of the long axis to the diameter of the second circumscribed circle having the largest diameter), it is advantageous to effectively reduce the in-plane retardation value of the optical film 101 to 3,000 nm or less, to effectively reduce the difference between the in-plane retardation value of the optical film 101 and the thickness-direction retardation value of the optical film 101, to avoid the rainbow pattern problem of the optical film 101, and to improve the display quality of the display device having the optical film 101.

In some embodiments, the second regulating particles 1012b are selected from at least one of sixth sub-regulating particles, seventh sub-regulating particles, eighth sub-regulating particles, ninth sub-regulating particles, and tenth sub-regulating particles that differ in shape from each other.

The difference in diameter of the second circumscribed circles of the second cross sections of each sixth sub-regulating particle along the extension direction of the long axis of the sixth sub-regulating particles is less than or equal to 0.3 microns, for example, may be 0 microns, 0.28 microns, 0.25 microns, 0.22 microns, 0.2 microns, 0.18 microns, 0.15 microns, 0.12 microns, 0.1 microns, 0.08 microns, 0.05 microns, 0.02 microns, or the like. In some embodiments, the diameters of the second circumscribed circles of the second cross sections located at the first end of the sixth sub-regulating particle are the same as the diameters of the second circumscribed circles of the second cross sections located at the middle of the sixth sub-regulating particle, and the diameters of the second circumscribed circles of the second cross sections located at the second end of the sixth sub-regulating particle are the same as the diameters of the second circumscribed circles of the second cross sections located at the middle of the sixth sub-regulating particle.

In some embodiments, the second cross sections of the sixth sub-regulating particles may be a regular shape or a random shape such as a circle, an ellipse, a triangle, a quadrilateral, or the like.

In some embodiments, the sixth sub-regulating particles are cubic particles or cuboid-like particles. The second cross sections of the sixth sub-regulating particles are square or rectangular. The diameter of the second circumscribed circle of any of the second cross sections of the sixth sub-regulating particle is the length of a diagonal of the square or rectangle in which the second cross section is present.

The ratio of the length of the long axis of the sixth sub-regulating particle to the diameter of the second circumscribed circle with a largest diameter among the plurality of the second cross sections of the sixth sub-regulating particle is more preferably close to 1, for example, may be 1.1, 1.2, 1.3, 1.4, 1.5, 1.6, 1.7, 1.8, 1.9, 2, 2.2, 2.5, 3, or the like.

Each seventh sub-regulating particle has a first end and a second end that are connected to each other. The diameters of the second circumscribed circles of the second cross sections at the first end of the seventh sub-regulating particle are gradually reduced in a direction away from the second end of the seventh sub-regulating particle, and the diameters of the second circumscribed circles of the second cross sections at the second end of the seventh sub-regulating particle are gradually reduced in the direction away from the first end of the seventh sub-regulating particle.

It will be appreciated that the diameters of the second circumscribed circles of the second cross sections located at the first end of each seventh sub-regulating particle are gradually reduced in a direction away from the second end of the seventh sub-regulating particle, indicating a tendency for the diameters of the second circumscribed circles of the second cross sections located at the first end of the seventh sub-regulating particle to decrease in the direction away from the second end of the seventh sub-regulating particle, including, but not limited to, the diameters of the second circumscribed circles of the second cross sections located at the first end of the seventh sub-regulating particle being gradually reduced.

It will be appreciated that the diameters of the second circumscribed circles of the second cross sections located at the second end of each seventh sub-regulating particle are gradually reduced in a direction away from the first end of the seventh sub-regulating particle, indicating a tendency for the diameters of the second circumscribed circles of the second cross sections located at the second end of the seventh sub-regulating particle to decrease in the direction away from the first end of the seventh sub-regulating particle, including, but not limited to, the diameters of the second circumscribed circles of the second cross sections located at the second end of the seventh sub-regulating particle being gradually reduced.

In some embodiments, the second cross sections of each seventh sub-regulating particle may have a regular shape or a random shape, such as a circle, an ellipse, a triangle, a quadrilateral, or the like.

In some embodiments, the seventh sub-regulating particles are spherical particles or ellipsoidal particles, and the second cross sections of the seventh sub-regulating particles are circular or ellipsoidal. When the second cross sections of the seventh sub-regulating particles are elliptical, the ratio of the long axis of any of the elliptical second cross sections of the seventh sub-regulating particle to the short axis thereof is greater than 1 and less than or equal to 3, for example, may be 1.2, 1.5, 1.8, 2, 2.2, 2.5, 2.8, or the like. When the seventh sub-regulating particles are spherical particles, any of the second cross sections of the seventh sub-regulating particle is circular and the second circumscribed circle of any of the second cross sections coincides with the second cross section, and the ratio of the long axis of the seventh sub-regulating particle to the diameter of the second circumscribed circle with a largest diameter among the plurality of the second cross sections of the seventh sub-regulating particle is 1.

The ratio of the length of the long axis of the seventh sub-regulating particles to the diameter of the second circumscribed circle with the largest diameter among the plurality of the second circumscribed circles of the seventh sub-regulating particles is preferably close to 1. When the seventh sub-regulating particle is an ellipsoidal particle, the shape of the seventh sub-regulating particle is more preferably similar to that of the spherical particle, that is, the closer the length of the long axis of the seventh sub-regulating particle and the diameter of the seventh sub-regulating particle are, the better. Preferably, the ratio of the length of the long axis of the seventh sub-regulating particle to the diameter of the second circumscribed circle with a largest diameter among the plurality of second circumscribed circles of the seventh sub-regulating particle is greater than or equal to 1 and less than or equal to 3. More preferably, the ratio of the length of the long axis of the seventh sub-regulating particle to the diameter of the second circumscribed circle with a largest diameter among the plurality of the second circumscribed circles of the seventh sub-regulating particle is greater than or equal to 1 and less than or equal to 1.5.

Along the extension direction of the long axis of each eighth sub-regulating particle, the difference in diameter of the second circumscribed circles of the second cross sections located in the middle of the eighth sub-regulating particle is less than or equal to 1 micron, for example, may be 0 microns, 0.95 microns, 0.8 microns, 0.78 microns, 0.75 microns, 0.72 microns, 0.7 microns, 0.68 microns, 0.65 microns, 0.62 microns, 0.6 microns, 0.58 microns, 0.55 microns, 0.52 microns, 0.5 microns, 0.48 microns, 0.45 microns, 0.42 microns, 0.4 microns, 0.38 microns, 0.35 microns, 0.32 microns, 0.3 microns, 0.28 microns, 0.25 microns, 0.22 microns, 0.2 microns, 0.18 microns, 0.15 microns, 0.12 microns, 0.1 microns, 0.08 microns, 0.05 microns, 0.02 microns, or the like. Along a direction away from the middle of the eighth sub-regulating particle, the diameters of the second circumscribed circles of the second cross sections located at the first end of the eighth sub-regulating particle are gradually reduced, the difference in diameter of the first circumscribed circles of the second cross sections of the eighth sub-regulating particle is less than or equal to 1 micron, for example, may be 0 microns, 0.95 microns, 0.8 microns, 0.78 microns, 0.75 microns, 0.72 microns, 0.7 microns, 0.68 microns, 0.65 microns, 0.62 microns, 0.6 microns, 0.58 microns, 0.55 microns, 0.52 microns, 0.5 microns, 0.48 microns, 0.45 microns, 0.42 microns, 0.4 microns, 0.38 microns, 0.35 microns, 0.32 microns, 0.3 microns, 0.28 microns, 0.25 microns, 0.22 microns, 0.2 microns, 0.18 microns, 0.15 microns, 0.12 microns, 0.1 microns, 0.08 microns, 0.05 microns, 0.02 microns, or the like. In some embodiments, along a direction away from the middle of the eighth sub-regulating particle, the diameters of the second circumscribed circles of the second cross sections located at the first end of the eighth sub-regulating particle are gradually reduced, and the diameters of the second circumscribed circles of the second cross sections located at the second end of the eighth sub-regulating particle are the same as the diameters of the second circumscribed circles of the second cross sections located at the middle of the eighth sub-regulating particle.

It will be appreciated that the diameter of the second circumscribed circles of the second cross sections located at the first end of each eighth sub-regulating particle are gradually reduced in a direction away from the middle of the eighth sub-regulating particles, indicating a tendency for the diameters of the second circumscribed circles of the second cross sections located at the first end of the eighth sub-regulating particle to decrease in a direction away from the middle of the eighth sub-regulating particles, including but not limited to, the diameter of the second circumscribed circles of the second cross sections located at the first end of the eighth sub-regulating particle being gradually reduced.

In some embodiments, the second cross sections of the eighth sub-regulating particles may be a regular shape or a random shape such as a circle, an ellipse, a triangle, a quadrilateral, or the like.

In some embodiments, the eighth sub-regulating particles may be acicular particles having a reduced diameter at one end.

In some embodiments, when the eighth sub-regulating particles are acicular particles having a reduced diameter at one end, the second cross sections of the eighth sub-regulating particles may be circular or elliptical. When the second cross sections at the second end or at the middle of the eighth sub-regulating particle are elliptical, the ratio of the long axis of any of the elliptical second cross sections at the second end or middle of the eighth sub-regulating particle to the short axis is greater than 1 and less than or equal to 3, for example, may be 1.2, 1.5, 1.8, 2, 2.2, 2.5, 2.8, or the like. The shape of the second cross sections at the first end of the eighth sub-regulating particle coincides with the shape of the second cross sections at the middle of the eighth sub-regulating particle, and the area are gradually reduced in a direction away from the middle of the eighth sub-regulating particle.

Along the extension direction of the long axis of each ninth sub-regulating particle, the difference in diameter of the second circumscribed circles of the second cross sections at the middle of the ninth sub-regulating particle is less than or equal to 1 micron, for example, may be 0 microns, 0.95 microns, 0.8 microns, 0.78 microns, 0.75 microns, 0.72 microns, 0.7 microns, 0.68 microns, 0.65 microns, 0.62 microns, 0.6 microns, 0.58 microns, 0.55 microns, 0.52 microns, 0.5 microns, 0.48 microns, 0.45 microns, 0.42 microns, 0.4 microns, 0.38 microns, 0.35 microns, 0.32 microns, 0.3 microns, 0.28 microns, 0.25 microns, 0.22 microns, 0.2 microns, 0.18 microns, 0.15 microns, 0.12 microns, 0.1 microns, 0.08 microns, 0.05 microns, 0.02 microns, or the like. Along a direction away from the middle of the ninth sub-regulating particle, the diameters of the second circumscribed circles of the second cross sections at the first end of the ninth sub-regulating particle are gradually reduced, and the diameters of the second circumscribed circles of the second cross sections at the second end of the ninth sub-regulating particle are gradually reduced. In some embodiments, along the extension direction of the long axis of the ninth sub-regulating particle, the diameters of the second circumscribed circles of the second cross sections located at the middle of the ninth sub-regulating particle are uniform, and the diameters of the second circumscribed circles of the second cross sections located at the first end and the second end of the ninth sub-regulating particle gradually changes.

It will be appreciated that the diameters of the second circumscribed circles of the second cross sections at the first end of the ninth sub-regulating particle are gradually reduced in a direction away from the middle of the ninth sub-regulating particle, indicating a tendency of the diameters of the second circumscribed circles of the second cross sections at the first end of the ninth sub-regulating particle to decrease in a direction away from the middle of the ninth sub-regulating particle, including but not limited to the diameter of the second circumscribed circles of the second cross sections at the first end of the ninth sub-regulating particle gradually decreasing in a direction away from the middle of the ninth sub-regulating particle.

It will be appreciated that the diameters of the second circumscribed circles of the second cross sections at the second end of the ninth sub-regulating particle are gradually reduced in a direction away from the middle of the ninth sub-regulating particle, indicating that the diameters of the second circumscribed circles of the second cross sections at the second end of the ninth sub-regulating particle exhibits a decreasing tendency in a direction away from the middle of the ninth sub-regulating particle, including but not limited to, in a direction away from the middle of the ninth sub-regulating particle, gradually decreases in the diameter of the second circumscribed circles of the second cross sections at the second end of the ninth sub-regulating particle.

In some embodiments, the second cross sections of each ninth sub-regulating particle may have a regular shape or a random shape, such as a circle, an ellipse, a triangle, a quadrangle, or the like.

In some embodiments, the ninth sub-regulating particles may be acicular particles having reduced diameter at both ends.

In some embodiments, when the ninth sub-regulating particles may be acicular particles having reduced diameters at both ends, the shape of the second cross sections of each ninth sub-regulating particle may be circular or elliptical. When the second cross sections at the middle of the ninth sub-regulating particle are elliptical, the ratio of the long axis to the short axis of the elliptical shape of any of the second cross sections at the middle of the ninth sub-regulating particle is greater than 1 and less than or equal to 3, for example, may be 1.2, 1.5, 1.8, 2, 2.2, 2.5, 2.8, or the like. The shape of the second cross sections at the first end and the second end of the ninth sub-regulating particle coincides with the shape of the second cross sections at the middle of the ninth sub-regulating particle, and the area are gradually reduced in a direction away from the middle of the ninth sub-regulating particle.

Each tenth sub-regulating particle has a first end and a second end that are connected to each other. Diameters of second circumscribed circles of the second cross sections of the tenth sub-regulating particle are gradually reduced along a direction from the first end of the tenth sub-regulating particle toward the second end of the tenth sub-regulating particle.

It will be appreciated that the diameters of the second circumscribed circles of the second cross sections of each tenth sub-regulating particle are gradually reduced along the direction from the first end of the tenth sub-regulating particle toward the second end of the tenth sub-regulating particle, indicating a tendency of the diameters of the second circumscribed circles of the second cross sections of the tenth sub-regulating particle to decrease in the direction from the first end of the tenth sub-regulating particle toward the second end of the tenth sub-regulating particle, including but not limited to, the diameters of the second circumscribed circles of the second cross sections of the tenth sub-regulating particle gradually decreasing in the direction from the first end of the tenth sub-regulating particle toward the second end of the tenth sub-regulating particle.

In some embodiments, the second cross sections of each tenth sub-regulating particle may have a regular shape or a random shape, such as a circle, an ellipse, a triangle, a quadrilateral, or the like.

In some embodiments, the tenth sub-regulating particles may be long cone-shaped particles.

In some embodiments, when the tenth sub-regulating particles are long cone-shaped particles, the second cross sections of each tenth sub-regulating particle are circular or elliptical. The shape of the second cross sections of the tenth sub-regulating particle is consistent and the area thereof is gradually reduced along the direction of the first end of the tenth sub-regulating particle toward the second end of the tenth sub-regulating particle. When the second cross sections of the tenth sub-regulating particle are elliptical, the ratio of the long axis of the elliptical shape to the short axis of the elliptical shape of any of the second cross sections of the tenth sub-regulating particle is greater than 1 and less than or equal to 3, for example, may be 1.2, 1.5, 1.8, 2, 2.2, 2.5, 2.8, or the like.

In some embodiments, the sixth sub-regulating particles and the seventh sub-regulating particles are more effective in improving the reduction of the difference between the in-plane retardation value of the optical film 101 and the thickness-direction retardation value of the optical film 101 as compared to the eighth sub-regulating particles, the ninth sub-regulating particles and the tenth sub-regulating particles, and the improved effect of the seventh sub-regulating particles is better than that of the sixth sub-regulating particles. Thus, preferably, the regulating particles 1012 include the sixth sub-regulating particles and/or the seventh sub-regulating particles. When the regulating particles 1012 include the sixth sub-regulating particles and the seventh sub-regulating particles, the mass fraction of the sixth sub-regulating particles in the regulating particles 1012 is greater than the mass fraction of the seventh sub-regulating particles in the regulating particles 1012. Preferably, the second regulating particles 1012b consist of the seventh sub-regulating particles and/or the sixth sub-regulating particles. More preferably, the second regulating particles 1012b consists of the seventh sub-regulating particles.

In some embodiments, the regulating particles 1012 include the first regulating particles 1012a and the second regulating particles 1012b so as to improve the chromaticity angle of view and contrast ratio of the optical film 101 while avoiding the problem of rainbow patterns caused by the optical film 101, and improve the display quality of the display device having the optical film 101.

In some embodiments, the first regulating particles 1012a have a slightly weaker effect of reducing the difference between the in-plane retardation value of the optical film 101 and the thickness-direction retardation value of the optical film 101 than the second regulating particles 1012b, and less of the first regulating particles 1012a can have a significant effect of improving the chromaticity angle of view of the optical film 101. Thus, the mass fraction of the first regulating particles 1012a in the regulating particles 1012 is less than the mass fraction of the second regulating particles 1012b in the regulating particles 1012. For example, the mass fraction of the second regulating particles 1012b in the regulating particles 1012 is greater than 50%, and the mass fraction of the first regulating particles 1012a in the regulating particles 1012 is less than 50%. The mass fraction of the second regulating particles 1012b in the regulating particles 1012 may be 55%, 60%, 65%, 70%, 75%, 80%, 85%, 90%, 95%, 99%, or the like.

In some embodiments, when the regulating particles 1012 include the second regulating particles 1012b and the first regulating particles 1012a, and the second regulating particles 1012b include the sixth sub-regulating particles and the seventh sub-regulating particles, the mass fraction of the seventh sub-regulating particles in the regulating particles 1012 is greater than the mass fraction of the sixth sub-regulating particles in the regulating particles 1012, and the mass fraction of the sixth sub-regulating particles in the regulating particles 1012 is greater than or equal to the mass fraction of the first regulating particles 1012a in the regulating particles 1012.

In some embodiments, the mass fraction of the sixth sub-regulating particles in the regulating particles 1012 is greater than or equal to 50%, for example, may be 55%, 60%, 70%, 75%, 80%, 85%, 90%, 95%, 99%, 100%, or the like. The mass fraction of the seventh sub-regulating particles in the regulating particles 1012 is less than or equal to 25%, for example, may be 20%, 15%, 10%, 5%, 3%, 1%, 0%, or the like. The mass fraction of the first regulating particles 1012a in the regulating particles 1012 is less than or equal to 25%, for example, may be 20%, 15%, 10%, 5%, 3%, 1%, 0%, or the like.

In some embodiments, the first regulating particles 1012a are selected from at least two of the first sub-regulating particles, the second sub-regulating particles, the third sub-regulating particles, the fourth sub-regulating particles, or the fifth sub-regulating particles. Preferably, the first regulating particles 1012a are a mixture of the first sub-regulating particles, the second sub-regulating particles, and the third sub-regulating particles. Alternatively, the first regulating particles 1012a are a mixture of the first sub-regulating particles, the fourth sub-regulating particles, and the fifth sub-regulating particles. Alternatively, the first regulating particles 1012a are a mixture of the first sub-regulating particles, the second sub-regulating particles, the third sub-regulating particles, the fourth sub-regulating particles, and the fifth sub-regulating particles. By selecting the first regulating particles 1012a from at least two particles of different shapes, the diversity of shapes of the first regulating particles 1012a is increased, the optical anisotropy of the first regulating particles 1012a is increased, and the enhancement effect of the first regulating particles 1012a on contrast ratio and brightness is improved. When the first regulating particles 1012a are selected from the first sub-regulating particles, the second sub-regulating particles, and the third sub-regulating particles, or when the first regulating particles 1012a are selected from the first sub-regulating particles, the fourth sub-regulating particles, and the fifth sub-regulating particles, or when the first sub-regulating particles 1012a are a mixture of the first sub-regulating particles, the second sub-regulating particles, the third sub-regulating particles, the fourth sub-regulating particles, and the fifth sub-regulating particles, the mass fraction of the first sub-regulating particles in the first regulating particles 1012a is 1% to 8%, for example, may be 1.5%, 2%, 2.5%, 3%, 3.5%, 4%, 4.5%, 5%, 6%, 6.5%, 7%, 7.5%, or the like, the mass fraction of the second sub-regulating particles and/or the fourth sub-regulating particles in the first regulating particles 1012a is 40% to 50%, for example, may be 41%, 42%, 43%, 44%, 45%, 46%, 47%, 48%, 49%, or the like; the mass fraction of the third sub-regulating particles and/or the fifth sub-regulating particles in the first regulating particles 1012a is 45% to 55%, for example, may be 46%, 47%, 48%, 49%, 50%, 51%, 52%, 53%, 54%, or the like. The mixing of the first sub-regulating particles, the second sub-regulating particles, and/or the fourth sub-regulating particles, the third sub-regulating particles, and/or the fifth sub-regulating particles according to the above ratio helps to improve the enhancement effect of the regulating particles 1012 on contrast ratio and brightness.

In some embodiments, the mass fraction of the regulating particles 1012 in the optical film 101 is less than or equal to 20%, for example, may be 0.0001%, 0.001%, 0.01%, 0.02%, 0.05%, 0.1%, 0.5%, 1%, 5%, 8%, 10%, 12%, 15%, 18%, or the like, so as to be uniformly dispersed in the optical film 101, and is effective to avoid the rainbow pattern problem of the optical film 101 in the large angle direction, thereby improving the display quality of the display device having the optical film 101. The regulating particles 1012 has a small mass fraction in the optical film 101, so that the rainbow pattern in the large-angle direction of the optical film 101 can be effectively reduced, and the smaller the mass fraction, the better the dispersibility. Preferably, the mass fraction of the regulating particles 1012 in the optical film 101 is less than or equal to 10%. Further preferably, the mass fraction of the regulating particles 1012 in the optical film 101 is less than or equal to 5%. More preferably, the mass fraction of the regulating particles 1012 in the optical film 101 is less than or equal to 1%. Still further preferably, the mass fraction of the regulating particles 1012 in the optical film 101 is less than or equal to 0.05%. Meanwhile, in order to ensure that the quantity of the regulating particles 1012 in the optical film 101 is sufficient to effectively avoid the rainbow pattern of the optical film 101 in the large angle direction, the mass fraction of the regulating particles 1012 in the optical film 101 may be greater than or equal to 0.0001%. Further, the mass fraction of the regulating particles 1012 in the optical film 101 may be greater than or equal to 0.001%, preferably greater than or equal to 0.003%, more preferably greater than or equal to 0.005%, further preferably greater than or equal to 0.015%, and further preferably greater than or equal to 0.03%.

In some embodiments, the first regulating particles 1012a are whiskers. The material of the second regulating particles 1012b and the material of the first regulating particles 1012a are selected from at least one of silicon dioxide, silicon carbide, silicon nitride, zinc oxide, magnesium oxide, aluminum oxide, calcium sulfate, calcium carbonate, potassium titanate, or aluminum borate.

In some embodiments, the first regulating particles 1012a and/or the second regulating particles 1012b may be surface modified to facilitate dispersion of the first regulating particles 1012a and/or the second regulating particles 1012b in the substrate 1011, or to enhance functionality such as toughness of the first regulating particles 1012a and/or the second regulating particles 1012b. When the first regulating particles 1012a and/or the second regulating particles 1012b are surface modified, the surface of the first regulating particles 1012a and/or the second regulating particles 1012b is modified by at least one of an inorganic cation, an inorganic anion, a polymer, a coupling agent, or a surfactant. That is, the surface of the first regulating particles 1012a and/or the second regulating particles 1012b includes at least one of an inorganic cationic group, an inorganic anionic group, a polymeric group, a coupling agent group, or a surfactant group.

Specifically, the surface of the first regulating particles 1012a and/or the second regulating particles 1012b is modified with at least one of magnesium chloride, calcium chloride, barium chloride, strontium chloride, stearic acid, sodium stearate, zinc octadecanoate, sulfonic surfactants, thio surfactants, titanates, aluminates, polyacrylamides, silanes, alkyl phosphates, aryl phosphates, alkyl phosphate salts, aryl phosphate salts, alkyl alcohol amide phosphates, alkyl alcohol amide phosphate salts, imidazoline phosphates, imidazoline phosphate salts, polyphosphates, polyphosphate salts, and siloxane phosphates. Preferably, the surface of the first regulating particles 1012a and/or the second regulating particles 1012b is modified by at least one of a sulfonic surfactant or a thio surfactant. The sulfonic surfactant may be selected from at least one of alkyl sulfonate salts or fluoroalkyl sulfonate salts, specifically, for example, at least one of sodium dodecyl sulfonate, sodium dodecyl benzene sulfonate, and sodium fluorododecyl sulfonate. The thio surfactant may be selected from at least one of a thiol or a fluorothiol, specifically, for example, at least one of an octanethiol, a dodecanethiol, a tetradecanethiol, an octadecanethiol, a fluorooctanethiol, or a fluorododecanethiol. When the sulfonic surfactant is mixed with the regulating particles 1012 to be surface-modified, the sulfonic surfactant groups form a sulfonic acid gourp shell layer on the surface of the whisker, such as a benzene ring sulfonic acid group shell layer, which is favorable for protecting the regulating particles 1012, enhancing the toughness of the regulating particles 1012, and reducing the breakage of the first regulating particles 1012a and/or the second regulating particles 1012b in the optical film 101. When the thio surfactant group is mixed with the regulating particles 1012 to be surface-modified, the thio surfactant group forms a O-S-O cross-linked network with hydroxyl groups on the surface of the whisker, and the bond energy of O-S-O is relatively large, which facilitates protection of the first regulating particles 1012a and/or the second regulating particles 1012b during the mixing of the first regulating particles 1012a and/or the second regulating particles 1012b with the material of the substrate 1011 to form the optical film 101, reduces breakage of the first regulating particles 1012a and/or the second regulating particles 1012b, and enhances the enhancement effect of the first regulating particles 1012a and/or the second regulating particles 1012b on optical functions such as contrast ratio and brightness. More preferably, the first regulating particles 1012a and/or the second regulating particles 1012b are modified with at least one of a sulfonic surfactant containing a fluorine substituent, or a thio surfactant containing a fluorine substituent, specifically for example, at least one of a sodium fluorododecyl sulfonate, a fluorooctanethiol, or a fluorododecyl thiol, wherein the fluorine atom has a high stability in the alkyl chain, the bond energy of the carbon-fluorine bond is higher than the bond energy of the carbon-carbon bond, and the carbon-fluorine bond has a shielding effect on the carbon-carbon bond, thereby facilitating protection of the carbon-carbon bond, and enhancing the stability of the first regulating particles 1012a and/or the second regulating particles 1012b.

In some embodiments, the optical film 101 has an in-plane retardation value. By the addition of the regulating particles 1012, the difference between the in-plane retardation value of the optical film 101 and the thickness-direction retardation value is reduced. The in-plane retardation value of the optical film 101 is less than 3,000 nm, thereby avoiding the rainbow pattern caused by the optical film 101.

In some embodiments, the in-plane retardation value of the optical film 101 is the retardation value of the optical film 101 in the plane in which the optical film 101 is located, and the plane in which the optical film 101 is located is perpendicular to the thickness direction Y of the optical film 101. The optical film 101 has a thickness-direction retardation value in the thickness direction Y of the optical film 101. When light passes through the optical film 101, the difference between the refractive index of the light in the plane in which the optical film 101 is located and the refractive index of the light in the thickness direction Y of the optical film 101 causes a difference between the in-plane retardation value and the thickness-direction retardation value of the optical film 101. When the in-plane retardation value of the optical film 101 is greater than or equal to 3,000 nm, the difference between the in-plane retardation value of the optical film 101 and the thickness-direction retardation value of the optical film 101 is too large. When light passes through the optical film 101 and is observed at a large angle (e.g., at an angle of 45 degrees, 60 degrees, etc. with the thickness direction Y of the optical film 101), there is a rainbow pattern phenomenon. By adding the regulating particles 1012, the difference between the refractive index of the light in the plane in which the optical film 101 is located and the light in the thickness direction Y of the optical film 101 is reduced, so that the in-plane retardation value of the optical film 101 is less than 3,000 nm, thereby avoiding the rainbow pattern of the optical film 101 in the large-angle direction, and improving the display quality of the display device having the optical film 101.

In some embodiments, the in-plane retardation value of the optical film 101 may be calculated by:$Re = d \times \left|{n}_{x}{- n}_{y}\right|$

Re denotes the in-plane retardation value of the optical film 101, nₓ denotes the refractive index of extraordinary light, n_{y} denotes the refractive index of ordinary light, and d denotes the thickness of the optical film 101.

In some embodiments, the in-plane retardation value of the optical film 101 may be obtained by the difference between the extraordinary light refractive index and the ordinary light refractive index of the optical film 101 obtained by a phase retardation measuring instrument (e.g., Optipro-micro of shintech Corporation) under a white light source of a continuous spectrum, thereby obtaining the in-plane retardation value of the optical film 101 by the above formula.

In some embodiments, the retardation amount in the thickness direction of the optical film 101 may be the average of the product of the thickness of the optical film 101 and anisotropy values △N_{xz}=△| nₓ-n_{z} | , △N_{yz}=△ | n_{y}-n_{z} | of two refractive indices observed by the optical film 101 on the cross section perpendicular to the plane in which the optical film 101 is located, respectively, and n_{z} is the refractive index in the thickness direction of the optical film 101.

In some embodiments, the in-plane retardation value of the optical film 101 is greater than or equal to 0 nanometers and less than or equal to 1000 nanometers, which facilitates further reducing the difference between the in-plane retardation value of the optical film 101 and the thickness-direction retardation value of the optical film 101. For example, the in-plane retardation value of the optical film 101 may be 20 nanometers, 50 nanometers, 100 nanometers, 120 nanometers, 150 nanometers, 200 nanometers, 220 nanometers, 250 nanometers, 300 nanometers, 320 nanometers, 350 nanometers, 400 nanometers, 420 nanometers, 450 nanometers, 500 nanometers, 520 nanometers, 550 nanometers, 600 nanometers, 620 nanometers, 650 nanometers, 700 nanometers, 720 nanometers, 750 nanometers, 800 nanometers, 820 nanometers, 850 nanometers, 900 nanometers, 920 nanometers, 950 nanometers, or the like, thereby effectively avoiding the rainbow pattern problem of the optical film 101 in the large angle direction, and improving the display quality of the display device having the optical film 101. Preferably, the in-plane retardation value of the optical film 101 is greater than or equal to 0 nm and less than or equal to 500 nm, which further effectively avoid the rainbow pattern problem of the optical film 101 in the large angle direction and improves the display quality of the display device having the optical film 101. More preferably, the in-plane retardation value of the optical film 101 is greater than or equal to 0 nm and less than or equal to 200 nm, so that the in-plane retardation value of the optical film 101 is close to the thickness-direction retardation value of the optical film 101, thereby effectively avoiding the rainbow pattern problem of the optical film 101 in the large angle direction and improving the display quality of the display device having the optical film 101.

In some embodiments, when the ratio of the in-plane retardation value of the optical film 101 to the thickness-direction retardation value of the optical film 101 is closer to 1, the smaller the difference between the refractive index of the light in the plane in which the optical film 101 is located and the refractive index of the light in the thickness direction Y of the optical film 101 is, the easier it is to eliminate the rainbow pattern. The ratio of the in-plane retardation value of the optical film 101 to the thickness-direction retardation value of the optical film 101 is greater than 0.1 and less than 2, for example, may be 0.2, 0.5, 0.6, 0.8, 1, 1.2, 1.4, 1.5, 1.6, 1.8, or the like, so that the rainbow pattern problem can be effectively addressed. Preferably, when the ratio of the in-plane retardation value of the optical film 101 to the thickness-direction retardation value of the optical film 101 is greater than or equal to 0.5 and less than or equal to 1.5, the occurrence of the rainbow pattern problem can be substantially avoided. More preferably, when the ratio of the in-plane retardation value of the optical film 101 to the thickness-direction retardation value of the optical film 101 is greater than or equal to 0.6 and less than or equal to 1.2, the rainbow pattern problem can be completely eliminated.

In some embodiments, the substrate 1011 is selected from at least one of a modified or unmodified polyester, a modified or unmodified cellulose acetate, a modified or unmodified polycyclic olefin.

In some embodiments, the modified or unmodified polyester may include at least one of modified or unmodified polyethylene terephthalate, modified or unmodified polycarbonate, modified or unmodified polymethyl methacrylate, modified or unmodified polyethylene naphthalate, or modified or unmodified polyethylene terephthalate. Modified or unmodified cellulose acetate may include modified or unmodified cellulose triacetate.

In some embodiments, the substrate 1011 may include a first sub-substrate and/or a second sub-substrate, the first sub-substrate may be selected from at least one of unmodified polyester or unmodified cellulose acetate. The second sub-substrate may be selected from at least one of modified polyester or modified cellulose acetate. In the substrate 1011, the mass fraction of the first sub-substrate is greater than the mass fraction of the second sub-substrate.

In some embodiments, the first sub-substrate and the second sub-substrate are uniformly mixed with each other. The mass fraction of the first sub-substrate in the substrate 1011 is greater than or equal to 65%, for example, may be 70%, 75%, 80%, 85%, 90%, 95%, 99%, or the like. The mass fraction of the second sub-substrate in the substrate 1011 is less than or equal to 35%, for example, may be 1%, 5%, 10%, 15%, 20%, 25%, 30%, or the like. The arrangement facilitates that the modified polyesters such as modified polyethylene terephthalate and the unmodified polyesters such as unmodified polyethylene terephthalate are well-miscible, or the modified cellulose such as modified acetate cellulose triacetate and the unmodified cellulose acetate such as unmodified cellulose triacetate are well-miscible, helping to improve the mechanical, flatness, crystallinity of the substrate 1011 and the dispersion of the regulating particles 1012, thereby improving the optical properties of the optical film 101.

In some embodiments, the modified cellulose triacetate, modified polyethylene terephthalate, modified polycarbonate, modified polymethyl methacrylate, or modified polyethylene naphthalate can be obtained by hydrophilic or lipophilic modification of unmodified cellulose triacetate, unmodified polyethylene terephthalate, unmodified polycarbonate, unmodified polymethyl methacrylate, or unmodified polyethylene naphthalate, respectively. For example, the modified polyethylene terephthalate may be obtained by introducing a linear alkyl side chain, a carboxyl side chain, a hydroxyl side chain, or a fluorine-containing group side chain in the unmodified polyethylene terephthalate. When the modified polyethylene terephthalate is a material that is obtained by introducing a carboxyl side chain and/or a hydroxyl side chain into the unmodified polyethylene terephthalate, the modified polyethylene terephthalate may be a material that is obtained by introducing 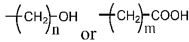 into the phenyl group of the unmodified polyethylene terephthalate, wherein n and m are both integers greater than or equal to 0 and less than or equal to 10.

In some embodiments, when the first sub-substrate is selected from unmodified polyethylene terephthalate, the second sub-substrate is selected from modified polyethylene terephthalate, which facilitates good miscibility of the modified polyethylene terephthalate with the unmodified polyethylene terephthalate, helps to improve the mechanical, flatness, crystallinity of the substrate 1011 and the dispersion of the regulating particles 1012, thereby improving the optical properties of the optical film 101.

In some embodiments, the difference between the refractive index of the substrate 1011 and the refractive index of the regulating particles 1012 is greater than or equal to 0.02, for example, may be 0.03, 0.05, 0.09, 0.1, 0.15, 0.2, or the like, so that the regulating particles 1012 provide a light diffusion function while addressing the rainbow pattern of the optical film 101, further improving the optical performance of the optical film 101. Preferably, the difference between the refractive index of the substrate 1011 and the refractive index of the regulating particles 1012 is greater than or equal to 0.1, for example, may be 0.12, 0.13, 0.14, 0.15, 0.2, or the like.

In some embodiments, a glass transition temperature of the substrate 1011 is 70°C to 600°C, for example, may be 80°C, 90°C, 100°C, 150°C, 200°C, 250°C, 300°C, 350°C, 400°C, 450°C, 500°C, 550°C, or the like.

In some embodiments, an elastic modulus of the substrate 1011 is 500 MPa to 5,000 MPa at 23°C, for example, may be 600 MPa, 700 MPa, 800 MPa, 900 MPa, 1,000 MPa, 1,200 MPa, 1,500 MPa, 1,800 MPa, 2,000 MPa, 2,200 MPa, 2,500 MPa, 2,800 MPa, 3,000 MPa, 3,200 MPa, 3,500 MPa, 3,800 MPa, 4,000 MPa, 4,200 MPa, 4,500 MPa, 4,800 MPa, or the like.

In some embodiments, the elastic modulus of the substrate 1011 may be obtained in a humidity of 50%.

In some embodiments, the thickness of the optical film 101 is greater than or equal to 5 microns and less than or equal to 100 microns, for example, may be 10 microns, 50 microns, 60 microns, 80 microns, 90 microns, or the like, so as to facilitate the processing and preparation of the optical film 101 and maintain appropriate light transmittance of the optical film 101. Preferably, the thickness of the optical film 101 is greater than or equal to 15 microns and less than or equal to 100 microns, for example, may be 20 microns, 25 microns, 30 microns, 40 microns, 50 microns, 60 microns, 80 microns, or the like.

According to the optical film 101 provided in the embodiments of the present disclosure, the regulating particles 1012 are added to the substrate 1011 of the optical film 101, so that at least one of the first regulating particles 1012a and the second regulating particles 1012 is dispersed in the dispersion portion 1011a, thereby obtaining a better optical improvement effect of the regulating particles 1012, and improving the display quality of the display device having the optical film 101.

Further, the mechanical properties of the optical film 101 are tested in accordance with the embodiments of the present disclosure, wherein the testing apparatus is a single-column computer system tensile testing machine (Model AI-3000, Gotech Testing Machines Inc.).

Test procedure: A specimen with a width × thickness of 250 mm×200 mm was placed on the test instrument with a fixture at a speed of 100-200 mm/min.

The calculation equation for tensile strength include:
$σ = \frac{p}{b \cdot h} .$

In the equation, σ is the tensile strength in MPa; P is the maximum load in N; b is the width of the specimen in mm; h is the thickness of the specimen in mm.

The calculation equation of the elongation at break is:
$e = \frac{{L}_{2} - {L}_{1}}{{L}_{1}} \times 100 .$

In the equation, e is the elongation at break in%; L₁ is a distance between two marks of a specimen when unstretched, in mm; L₂ is a distance between the two marks when the specimen is broken, in mm.

It is noted that median values of the five calculated values in the longitudinal direction and the transverse direction, respectively, are taken as test results, and maximum and minimum values of each direction are reported, with three significant digits for tensile strength results and two significant digits for elongation at break results. The results are shown in Table 1 below:

**Table 1**

| [Table 1_sm_0001] | | | | |
|---|---|---|---|---|
| | Shape of particles | Mass fraction | Tensile strength | Elongation at break |
| Comparative Example | / | 0% | 180 MPa | 55% |
| Example 01 | Spherical | 0.5% | 200 MPa | 120% |
| Example 02 | Spherical | 1% | 250 MPa | 260% |
| Example 03 | Rod-shaped | 0.5% | 205 MPa | 136% |

As can be seen from Table 1, the mechanical properties of the optical film 101 can be effectively improved by incorporating the regulating particles 1012 in the optical film 101.

It should be noted that the above-mentioned tensile strength may be tensile strength in the TD direction of the optical film 101, or may be tensile strength in the MD direction of the optical film 101.

In some embodiments, a tensile strength of the optical film 101 is greater than or equal to 30 MPa and less than or equal to 300 MPa, and further preferably greater than 180 Mpa, for example, may be 190 MPa, 200 MPa, 210 MPa, 220 MPa, 230 MPa, 240 MPa, 250 MPa, 260 MPa, 270 MPa, 280 MPa, 290 MPa, or 300 MPa.

In some embodiments, an elongation at break of the optical film 101 is greater than or equal to 1% and less than or equal to 300%, and further preferably greater than 55%, for example, may be 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, or 300%.

In some embodiments, a fracture strength of the optical film 101 is greater than or equal to 50 N/mm and less than or equal to 500 N/mm, for example, may be 50 N/mm, 100 N/mm, 150 N/mm, 200 N/mm, 250 N/mm, 300 N/mm, 350 N/mm, 400 N/mm, 450 N/mm, or 500 N/mm. A thermal shrinkage ratio of the optical film may be less than 2%, for example, may be 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, or 1.9%.

In some embodiments, when the material of the substrate 1011 of the optical film 101 is polymethyl methacrylate, the tensile strength of the optical film 101 may be greater than or equal to 30, and less than or equal to 150MPa, and the elongation at break of the optical film 101 may be greater than or equal to 5%, and less than or equal to 70%. When the material of the substrate 1011 of the optical film 101 is polyethylene terephthalate, the tensile strength of the optical film 101 may be greater than or equal to 100 MPa and less than or equal to 300 MPa, and the elongation at break of the optical film 101 may be greater than or equal to 50% and less than or equal to 300%.

Referring to FIGs. 7 to 10, some embodiments of the present disclosure further provide a polarizer 100 including the optical film 101 as described above.

The polarizer 100 further includes a polarizing layer 102 on a side of the optical film 101.

Referring to FIGs. 7 to 8 and 10, in some embodiments, a first surface of the optical film 101 is attached to a side of the polarizing layer 102 close to the optical film 101, and a second surface of the optical film 101 is disposed on a side of the first surface of the optical film 101 away from the polarizing layer.

Preferably, the polarizer further includes a first optical functional layer on at least one side of the substrate. The first optical functional layer includes at least one of an anti-glare sub-layer, a transparent hardened sub-layer, a low-reflection sub-layer, an anti-reflection sub-layer, an anti-fingerprint sub-layer, or an anti-static sub-layer. A side of the dispersion portion away from the polarizing layer is coplanar with the second surface.

The first optical functional layer is disposed between the polarizing layer and the optical film. Or,

Alternatively, the first optical functional layer is disposed on a side of the optical film away from the polarizing layer.

Specifically, the polarizer 100 further includes a first adhesive layer 104 disposed on a sided of the optical film 101 close to the polarizing layer 102. The first surface of the optical film is attached to a side of the polarizing layer 102 close to the optical film 101 by the first adhesive layer 104.

Referring to FIGs. 7 to 10, in some embodiments, the side of the dispersion portion 1011a away from the polarizing layer is coplanar with the second surface. When the polarizer 100 is applied to the display device, the polarizer 100 may be disposed on a light output side of the display panel of the display device, and at this time, the optical film 101 is disposed on a light output side of the polarizing layer 102. The side of the dispersion portion 1011a away from the polarizing layer is coplanar with the second surface, and the dispersion portion 1011a is closer to the user, thereby facilitating the optical improvement effect achieved by the first regulating particles 1012a and/or the second regulating particles 1012b dispersed in the dispersion portion 1011a to the user, and improving the display quality of the display device having the polarizer 100.

Referring to FIGs. 7 to 10, in some embodiments, the polarizer 100 further includes a first optical functional layer 103 disposed on at least one side of the substrate 1011.

The first optical functional layer 103 is disposed between the polarizing layer 102 and the optical film 101 (not shown). Alternatively, the first optical functional layer 103 is disposed on a side of the optical film 101 away from the polarizing layer 102 (as shown in FIGs. 7 to 9).

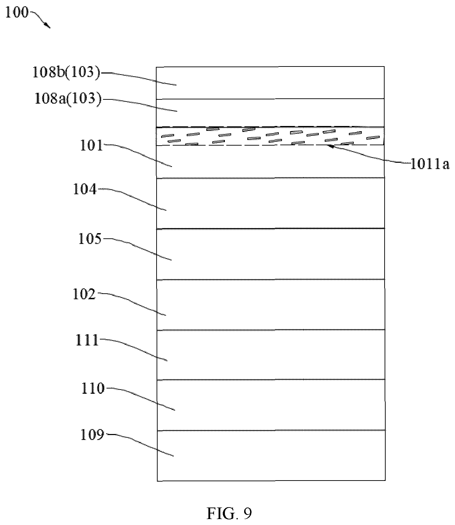

Referring to FIGs. 7 to 8 and 10, in some embodiments, the first adhesive layer 104 is in direct contact with the polarizing layer 102. Alternatively, in some embodiments, as shown in FIG. 9, the polarizer 100 further includes a protection layer 105 between the optical film 101 and the polarizing layer 102, and the first adhesive layer 104 is in direct contact with the protection layer 105.

In some embodiments, the first adhesive layer 104 is in direct contact with the optical film 101, and the first adhesive layer 104 is in direct contact with the polarizing layer 102. Alternatively, the first adhesive layer 104 is in direct contact with the optical film 101, and the first adhesive layer 104 is in direct contact with the protection layer 105.

In some embodiments, the first adhesive layer 104 may be selected from at least one of a water-based adhesive, a pressure sensitive adhesive, or an ultraviolet adhesive. A material of the water-based adhesive may be selected from polyvinyl alcohol, a material of the pressure sensitive adhesive may be selected from acrylate copolymers, and a material of the ultraviolet adhesive may be selected from multifunctional acrylate monomers.

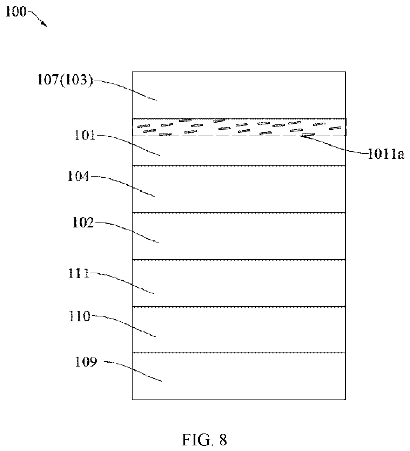

Referring to FIGs. 7 to 9, in some embodiments, the first optical functional layer 103 includes at least one of a transparent hardened sub-layer 107 (as shown in FIGs. 7 and 8), a low-reflection sub-layer 108 (as shown in FIG. 9), an anti-reflection sub-layer, an anti-fingerprint sub-layer, or an anti-static sub-layer. Referring to FIG. 9, when the first optical functional layer 103 is the low-reflection sub-layer 108, the low-reflection sub-layer 108 may be formed by stacking a transparent hardened sub-portion 108b and a low-refraction sub-portion 108a.

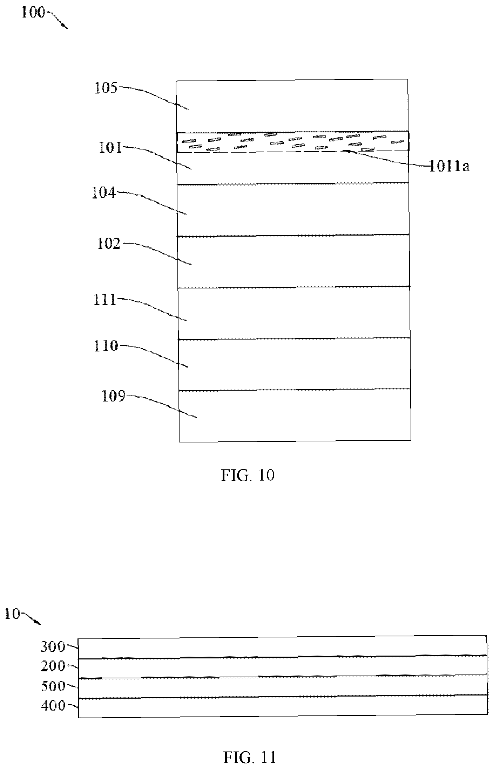

Referring to FIG. 10, in some embodiments, the protection layer 105 is disposed on a side of the optical film 101 away from the polarizing layer 102.

In some embodiments, the polarizing layer 102 is made of polyvinyl alcohol and a dye.

Referring to FIGs. 7 to 10, in some embodiments, the polarizer 100 further includes a release layer 109 disposed on a side of the polarizing layer 102 away from the optical film 101. The release layer 109 is bonded to the polarizing layer 102 by a second adhesive layer 110. When the polarizer 100 is applied to the display device, the release layer 109 is removed to expose the second adhesive layer 110 so that the polarizer 100 is adhered to the display panel through the second adhesive layer 110.

Referring to FIGs. 7 to 10, in some embodiments, the polarizer 100 further includes a compensation layer 111 disposed between the second adhesive layer 110 and the polarizing layer 102.

According to the embodiments of the present disclosure, by the arrangement of the optical film 101, the optical defects such as moire pattern or white spots caused by the polarizer 100 are avoided, and the chromaticity angle of view and the contrast ratio of the display device to which the polarizer 100 is applied are improved.

Referring to FIG. 11, some embodiments of the present disclosure further provide a display device 10 including the polarizer 100 as described above.

Specifically, the display device includes a display panel 200 and a first polarizer 300 disposed on a light output side of the display panel 200. The first polarizer 300 is selected from the polarizer 100 described above.

In some embodiments, the display panel 200 may be a liquid crystal display panel, a spontaneous display panel, or the like. The spontaneous display panel may be an orgnic light-emitting diode (OLED) display panel, or the like.

In some embodiments, the optical film 101 in the first polarizer 300 is disposed on a side of the polarizer layer 102 in the first polarizer 300 away from the display panel.

When the display panel 200 is a liquid crystal display panel, the display device 10 further includes a backlight module 400 disposed on a side of the display panel 200 away from the first polarizer 300. The backlight module 400 is used to provide a light source for the display panel 200. The display device 10 includes a second polarizer 500 disposed between the backlight module 400 and the display panel 200. The second polarizer 500 may be selected from the polarizer 100 as described above. Alternatively, the second polarizer 500 may not be selected from the polarizer 100 as described above.

Next, the present disclosure will be described in detail with reference to some examples. It should be noted, however, that these examples are provided for purposes of illustration only and should not be construed in any way as limiting the application.

### Example 1

In the present embodiment, the material of the substrate is unmodified polyethylene terephthalate, and the regulating particles in the substrate are spherical polystyrene that are dispersed in the upper substrate sub-layer having a thickness of 20 microns. The upper substrate sub-layer having a thickness of 20 microns, the intermediate substrate sub-layer having a thickness of 20 microns, and the lower substrate sub-layer having a thickness of 20 microns are stretched in a MD direction (Moving Direction) and a TD direction (Transfer Direction) to form a optical film 1 having a thickness of 60 microns. A mass fraction of the regulating particles in the optical film 1 is 0.5%.

### Example 2

This example is the same as or similar to Example 1, except that the regulating particles are rod-shaped calcium carbonate, and an optical film 2 is formed.

### Example 3

This example is the same as or similar to Example 1, except that the regulating particles are cubic calcium carbonate, and an optical film 3 is formed.

### Example 4

This example is similar to Example 1, except that the regulating particles are particles that are formed by mixing rod-shaped calcium carbonate, spherical polystyrene, and cubic silicon dioxide at a mass ratio of 2:6:2, and an optical film 4 is formed.

### Example 5

This example is similar to Example 2, except that the regulating particles are dispersed in an upper substrate sub-layer having a thickness of 18 microns, and an optical film 5 is formed.

### Example 6

This example is similar to Example 3, except that the regulating particles are dispersed in an intermediate substrate sub-layer having a thickness of 20 microns, and an optical film 6 is formed.

### Example 7

This example is similar to Example 6, except that the regulating particles are dispersed in a lower substrate sub-layer having a thickness of 20 microns, and an optical film 7 is formed.

### Example 8

This example is similar to Example 4, except that the regulating particles are dispersed in an upper substrate sub-layer having a thickness of 2 microns, and an optical film 8 is formed.

### Example 9

This example is similar to Example 4, except that the regulating particles are dispersed in an upper substrate sub-layer having a thickness of 6 microns, and an optical film 9 is formed.

### Example 10

This example is similar to Example 4, except that the regulating particles are dispersed in an upper substrate sub-layer having a thickness of 12 microns, and an optical film 10 is formed.

### Example 11

This example is similar to Example 4, except that the regulating particles are dispersed in an upper substrate sub-layer having a thickness of 15 microns, and an optical film 11 is formed.

### Example 12

This example is similar to Example 4, except that the regulating particles are dispersed in an upper substrate sub-layer having a thickness of 30 microns, and an optical film 12 is formed.

### Example 13

This example is similar to Example 4, except that the regulating particles are dispersed in an upper substrate sub-layer having a thickness of 40 microns, and an optical film 13 is formed.

### Example 14

This example is similar to Example 4, except that the regulating particles are dispersed in an upper substrate sub-layer having a thickness of 48 microns, and an optical film 14 is formed.

### Example 15

This example is similar to Example 4, except that the regulating particles are dispersed in an upper substrate sub-layer having a thickness of 54 microns, and an optical film 15 is formed.

### Example 16

This example is similar to Example 4, except that the regulating particles are dispersed in an upper substrate sub-layer having a thickness of 58 microns, and an optical film 16 is formed.

### Comparative Example 1

This comparative example is similar to Example 2, except that the regulating particles are distributed in the upper substrate sub-layer, the intermediate substrate sub-layer, and the lower substrate sub-layer to form a comparative optical film 1.

The optical films obtained in Examples 1 to 16 and the comparative optical films obtained in Comparative Example 1 were subjected to an in-plane retardation value obtained by an Optipro-micro phase retardation measuring instrument from shintech, and the results are shown in Table 1.

The optical films obtained in Examples 1 to 16 and the comparative optical films obtained in Comparative Example 1 were individually disposed on a side of a polarizer away from a display panel, and the polarizer provided with one of the optical films was attached to a 75-inch liquid crystal display panel for observing rainbow pattern from front view and side view, and the results are shown in Table 1. The polarizer to be tested includes a compensation layer, a polarizing layer, a protection layer, the optical film (or the comparative optical film), and a transparent hardened sub-layer, which are gradually laminated.

The optical films obtained in Examples 1 to 16 were respectively disposed on the side of the polarizer away from the display panel, in which the upper substrate sub-layer was located on a side of the intermediate substrate sub-layer away from the display panel, and the lower substrate sub-layer was located on a side of the intermediate substrate sub-layer away from the display panel. Then, the polarizer was attached to the 75-inch liquid crystal display panel for testing optical effect, and the results are shown in Table 2. The polarizer to be tested includes a compensation layer, a polarizing layer, a protection layer, the optical film (or the comparative optical film), and a transparent hardened sub-layer, which are gradually laminated.

Contrast ratio is a ratio of brightness in the white state to brightness in the dark state of the display panel. In this test, the center brightness of the display panel in the white state and the center brightness of the display panel in the dark state were measured.

Chromaticity angle of view measurement is carried out based on CESI0.03.

**Table 2**

| [Table 1_sm_0002] | | | | |
|---|---|---|---|---|
| | In-plane retardation value (nm) | Rainbow pattern | Contrast ratio | Chromaticity angle of view |
| Optical film 1 | 4 | No rainbow | 3986 | 144 |
| Optical film 2 | 18 | No rainbow | 3100 | 160 |
| Optical film 3 | 10 | No rainbow | 3658 | 150 |
| Optical film 4 | 13 | No rainbow | 3534 | 155 |
| Optical film 5 | 20 | No rainbow | 3015 | 163 |
| Optical film 6 | 11 | No rainbow | 3587 | 151 |
| Optical film 7 | 11 | No rainbow | 3523 | 152 |
| Optical film 8 | 32 | No rainbow | 4326 | 138 |
| Optical film 9 | 28 | No rainbow | 3001 | 164 |
| Optical film 10 | 16 | No rainbow | 3122 | 160 |
| Optical film 11 | 22 | No rainbow | 3221 | 156 |
| Optical film 12 | 19 | No rainbow | 3523 | 149 |
| Optical film 13 | 17 | No rainbow | 3745 | 145 |
| Optical film 14 | 12 | No rainbow | 3978 | 141 |
| Optical film 15 | 9 | No rainbow | 4141 | 139 |
| Optical film 16 | 8 | No rainbow | 4326 | 138 |
| Comparative optical film 1 | 15 | No rainbow | 3366 | 158 |

As can be seen from Table 2, by dispersing the regulating particles in the substrate sub-layer(s), the in-plane retardation value of the optical film is reduced, the rainbow pattern is eliminated, and the contrast ratio and the angle of view measured based on CESI0.03 are improved. By dispersing the regulating particles in the dispersion portion (upper substrate sub-layer) farther away from the display panel, the optical improvement of the optical film is better in terms of contrast ratio, the angle of view measured based on CESI0.03, and the like. Dispersing the regulating particles in the dispersion portion (e.g., upper substrate sublayer) has a better effect on the optical improvement of the optical film in terms of contrast ratio and the angle of view measured based on CESI0.03 than dispersing the regulating particles throughout the optical film. In terms of reducing the in-plane retardation value of the optical film, the spherical particles have the best effect of reducing the in-plane retardation value of the optical film, followed by the cubic regulating particles, further followed by the regulating particles composed of a mixture of various shapes of regulating particles, and the rod-shaped regulating particles have the worst effect of reducing the in-plane retardation value of the optical film. In terms of the improvement of the chromaticity angle of view and contrast ratio of the optical film, the rod-shaped particles have the best effect, followed by the regulating particles composed of a mixture of various shapes of particles, further followed by the cubic particles, and spherical particles have the worst effect.

Embodiments of the present disclosure provide the optical film, the polarizer, and the display device, wherein the optical film includes the substrate and the regulating particles that comprises the first regulating particles and/or the second regulating particles, each first regulating particle has a length to diameter ratio of greater than or equal to 5 and less than or equal to 50, each second regulating particle has a length to diameter ratio of greater than or equal to 1 and less than 5, the first regulating particles and/or the second regulating particles are dispersed in a dispersion portion of the substrate, and the ratio of the thickness of the dispersion portion to the thickness of the substrate is greater than or equal to 1: 100 and less than 1: 1. By adding the regulating particles to the substrate of the optical film, at least one of the first regulating particles and the second regulating particles is dispersed in the dispersion portion, so that the regulating particles provide a better improvement in terms of optical effect and improve the display quality of the display device having the optical film.

The above describes in detail the optical film, the polarizer, and the display device according to the embodiments of the present disclosure, and the principles and embodiments of the present disclosure are described herein by specific examples. The description of the above embodiments is merely provided to help understand the method of the present disclosure and the core idea thereof. Variations will be made to those skilled in the art in both the detailed description and the scope of application in accordance with the teachings of the present disclosure. In view of the foregoing, the present description should not be construed as limiting the application.

## Claims

1. An optical film comprising:
a substrate comprising a dispersion portion, wherein a ratio of a thickness of the dispersion portion to a thickness of the substrate is greater than or equal to 1: 100 and less than 1: 1; and
regulating particles dispersed in the dispersion portion, wherein the regulating particles comprise:
first regulating particles, wherein each of the first regulating particles has a plurality of first cross sections, each of the first cross sections has a first circumscribed circle, a ratio of a length of a long axis of each of the first regulating particles to a diameter of the first circumscribed circle with a largest diameter among the first cross sections thereof is greater than or equal to 5 and less than or equal to 50; and/or
second regulating particles, wherein each of the second regulating particles has a plurality of second cross sections, each of the second cross sections has a second circumscribed circle, a ratio of a length of a long axis of each of the second regulating particles to a diameter of the second circumscribed circle withwith a largest diameter among the second cross sections thereof is greater than or equal to 1 and less than 5.

2. The optical film according to claim 1, wherein the ratio of the thickness of the dispersion portion to the thickness of the substrate is greater than or equal to 1: 10 and less than or equal to 9:10.

3. The optical film according to claim 1, wherein the substrate comprises a first surface and a second surface opposite to each other in a thickness direction of the substrate, a side of the dispersion portion close to the first surface is parallel to the first surface, and another side of the dispersion portion close to the second surface is parallel to or coincident with the second surface; and
the ratio of the thickness of the dispersion portion to the thickness of the substrate is greater than or equal to 1: 4 and less than or equal to 1: 2.

4. The optical film according to any one of claims 1 to 3, wherein the regulating particles comprise the first regulating particles that are dispersed in the dispersion portion, an acute angle is formed between the long axis of each of the first regulating particles and a plane in which the first surface of the substrate is located, and the acute angle is greater than or equal to 0° and less than or equal to 40°.

5. The optical film according to claim 4, wherein the regulating particles comprise the second regulating particles that are dispersed outside the dispersion portion.

6. The optical film according to claim 1, wherein the first regulating particles are selected from at least one of first sub-regulating particles, second sub-regulating particles, third sub-regulating particles, fourth sub-regulating particles, or fifth sub-regulating particles that differ in shape from each other, and the second regulating particles are selected from at least one of sixth sub-regulating particles, seventh sub-regulating particles, eighth sub-regulating particles, ninth sub-regulating particles, or tenth sub-regulating particles that differ in shape from each other;
along an extension direction of a long axis of each of the first sub-regulating particles, a difference in diameter of first circumscribed circles of first cross sections of each of the first sub-regulating particles is less than or equal to 0.3 microns;
along an extension direction of a long axis of each of the second sub-regulating particles, a difference in diameter of first circumscribed circles of first cross sections at a middle of each of the second sub-regulating particles is less than or equal to 1 micron; and along a direction away from the middle of each of the second sub-regulating particles, diameters of first circumscribed circles of first cross sections at a first end of each of the second sub-regulating particles are gradually reduced,; and a difference in diameter of first circumscribed circles of first cross sections at a second end of each of the second sub-regulating particles is less than or equal to 1 micron;
along an extension direction of a long axis of each of the third sub-regulating particles, a difference in diameter of first circumscribed circles of first cross sections at a middle of each of the third sub-regulating particles is less than or equal to 1 micron; and along a direction away from the middle of each of the third sub-regulating particles, diameters of first circumscribed circles of first cross sections at a first end of each of the third sub-regulating particles are gradually reduced, and diameters of first circumscribed circles of first cross sections at a second end of each of the third sub-regulating particles are gradually reduced;
each of the fourth sub-regulating particles has a first end and a second end that are connected to each other, and along a direction from the first end toward the second end of each of the fourth sub-regulating particles, diameters of first circumscribed circles of first cross sections of each of the fourth sub-regulating particles are gradually reduced;
each of the fifth sub-regulating particles has a first end and a second end that are connected to each other; along a direction away from the second end of each of the fifth sub-regulating particles, diameters of first circumscribed circles of first cross sections at the first end of each of the fifth sub-regulating particles are gradually reduced; and along a direction away from the first end of each of the fifth sub-regulating particles, diameters of first circumscribed circles of first cross sections at the second end of each of the fifth sub-regulating particles are gradually reduced;
along an extension direction of a long axis of each of the sixth sub-regulating particles, a difference in diameter of second circumscribed circles of second cross sections of each of the sixth sub-regulating particles is less than or equal to 0.3 microns;
each of the seventh sub-regulating particles has a first end and a second end that are connected to each other; along a direction away from the second end of each of the seventh sub-regulating particles, diameters of second circumscribed circles of second cross sections at the first end of each of the seventh sub-regulating particles are gradually reduced; and along a direction away from the first end of each of the seventh sub-regulating particles, diameters of second circumscribed circles of second cross sections at the second end of each of the seventh sub-regulating particles are gradually reduced;
along an extension direction of a long axis of each of the eighth sub-regulating particles, a difference in diameter of second circumscribed circles of second cross sections at a middle of each of the eighth sub-regulating particles is less than or equal to 1 micron; along a direction away from the middle of each of the eighth sub-regulating particles, diameters of second circumscribed circles of second cross sections at a first end of each of the eighth sub-regulating particles are gradually reduced, and a difference in diameter of second circumscribed circles of second cross sections at a second end of each of the eighth sub-regulating particles is less than or equal to 1 microns;
along an extension direction of a long axis of each of the ninth sub-regulating particles, a difference in diameter of second circumscribed circles of second cross sections at a middle of each of the ninth sub-regulating particles is less than or equal to 1 micron; and along a direction away from the middle of each of the ninth sub-regulating particles, diameters of second circumscribed circles of second cross sections at a first end of each of the ninth sub-regulating particles are gradually reduced, and diameters of second circumscribed circles of second cross sections at a second end of each of the ninth sub-regulating particles are gradually reduced; and
each of the tenth sub-regulating particles has a first end and a second end that are connected to each other, and along a direction from the first end toward the second end of each of the tenth sub-regulating particles, diameters of second circumscribed circles of second cross sections of each of the tenth sub-regulating particles are gradually reduced.

7. The optical film according to claim 6, wherein the regulating particles comprise the first regulating particles and the second regulating particles, a mass fraction of the first regulating particles in the regulating particles is less than 50%, and a mass fraction of the second regulating particles in the regulating particles is greater than 50%.

8. The optical film according to claim 1, wherein a mass fraction of the regulating particles in the substrate is greater than or equal to 0.0001% and less than or equal to 5%, and a tensile strength of the optical film is greater than or equal to 30 MPa and less than or equal to 300 MPa.

9. The optical film according to claim 1, wherein the substrate comprises a first sub-layer, a second sub-layer, and a third sub-layer that are stacked, the first sub-layer and the third sub-layer are disposed on opposite sides of the second sub-layer, and the dispersion portion is disposed in at least one of the first sub-layer, the second sub-layer, or the third sub-layer.

10. The optical film according to claim 9, wherein the dispersion portion is disposed in the first sub-layer and/or in the third sub-layer.

11. The optical film according to claim 10, wherein the dispersion portion is disposed on a side of the first sub-layer away from the second sub-layer, and/or the dispersion portion is disposed on a side of the third sub-layer away from the second sub-layer.

12. The optical film according to claim 9, wherein a tensile strength of the first sub-layer is greater than that of the second sub-layer, and a tensile strength of the third sub-layer is greater than that of the second sub-layer.

13. The optical film according to claim 9, wherein a transmittance of the second sub-layer is greater than that of the first sub-layer, and a transmittance of the second sub-layer is greater than that of the third sub-layer.

14. The optical film according to claim 1, wherein an elongation at break of the optical film is greater than or equal to 1% and less than or equal to 300%.

15. The optical film according to claim 1, wherein a fracture strength of the optical film is greater than or equal to 50 N/mm and less than or equal to 500 N/mm, and a thermal shrinkage ratio of the optical film is less than 2%.

16. A polarizer comprising a polarizing layer and an optical film, wherein the polarizing layer is disposed on a side of the optical film, a second surface of the optical film is disposed on a side of a first surface of the optical film away from the polarizing layer;
wherein the optical film comprises:
a substrate comprising a dispersion portion, wherein a ratio of a thickness of the dispersion portion to a thickness of the substrate is greater than or equal to 1: 100 and less than 1: 1; and
regulating particles dispersed in the dispersion portion, wherein the regulating particle comprises:
first regulating particles, wherein each of the first regulating particles has a plurality of first cross sections, each of the first cross sections has a first circumscribed circle, a ratio of a length of a long axis of each of the first regulating particles to a diameter of the first circumscribed circle with a largest diameter among the first cross sections thereof is greater than or equal to 5 and less than or equal to 50; and/or
second regulating particles, wherein each of the second regulating particles has a plurality of second cross sections, each of the second cross sections has a second circumscribed circle, a ratio of a length of a long axis of each of the second regulating particles to a diameter of the second circumscribed circle with a largest diameter among the second cross sections thereof is greater than or equal to 1 and less than 5.

17. The polarizer according to claim 16, wherein the substrate comprises a first sub-layer, a second sub-layer, and a third sub-layer that are stacked, the first sub-layer and the third sub-layer are disposed on opposite sides of the second sub-layer, and the dispersion portion is disposed in at least one of the first sub-layer, the second sub-layer, or the third sub-layer.

18. The polarizer according to claim 17, wherein the dispersion portion is disposed in the first sub-layer and/or in the third sub-layer.

19. The polarizer according to claim 16, wherein the polarizer comprises a first optical functional layer disposed on at least one side of the substrate, the first optical functional layer comprises at least one of an anti-glare sub-layer, a transparent hardened sub-layer, a low-reflection sub-layer, an anti-reflection sub-layer, an anti-fingerprint sub-layer, or an anti-static sub-layer, and a side of the dispersion portion away from the polarizing layer is coplanar with the second surface;
the first optical functional layer is disposed between the polarizing layer and the optical film; or,
The first optical functional layer is disposed on a side of the optical film away from the polarizing layer.

20. A display device comprising a polarizer, wherein the polarizer comprises a polarizing layer and an optical film, the polarizing layer is disposed on a side of the optical film, and a second surface of the optical film is disposed on a side of a first surface of the optical film away from the polarizing layer;
wherein the optical film comprises:
a substrate comprising a dispersion portion, wherein a ratio of a thickness of the dispersion portion to a thickness of the substrate is greater than or equal to 1: 100 and less than 1: 1; and
regulating particles dispersed in the dispersion portion, wherein the regulating particle comprises:
first regulating particles, wherein each of the first regulating particles has a plurality of first cross sections, each of the first cross sections has a first circumscribed circle, a ratio of a length of a long axis of each of the first regulating particles to a diameter of the first circumscribed circle with a largest diameter among the first cross sections thereof is greater than or equal to 5 and less than or equal to 50; and/or
second regulating particles, wherein each of the second regulating particles has a plurality of second cross sections, each of the second cross sections has a second circumscribed circle, a ratio of a length of a long axis of each of the second regulating particles to a diameter of the second circumscribed circle with a largest diameter among the second cross sections thereof is greater than or equal to 1 and less than 5.
